# EUROPÄISCHE PATENTANMELDUNG

(11) **EP 3 636 402 A2**
(43) Veröffentlichungstag der Anmeldung: **15.04.2020**
(21) Anmeldenummer: 19194864.5
(22) Anmeldetag: 02.09.2019
(51) Int. Cl.: B26D 7/22, B26D 7/24, B26D 7/20, F16P 3/14

(54) **LEBENSMITTELSCHNEIDEVORRICHTUNG MIT SICHERHEITSEINHEIT**

(30) Priorität: 19.09.2018 DE 102018215885
(71) Anmelder: Robert Bosch GmbH, 70442 Stuttgart (DE)
(72) Erfinder: Dennis, Daniel, 72622 Nuertingen (DE); Esenwein, Florian, 70771 Leinfelden-Echterdingen (DE)

(57) **Zusammenfassung**

Die Erfindung geht aus von einer Lebensmittelschneidevorrichtung, insbesondere von einer Brotschneidevorrichtung, mit zumindest einem Schneidwerkzeug (12a-12k) zu einem Durchtrennen von Lebensmitteln (14a; 14f) und mit zumindest einer Sicherheitseinheit (16a-16k) zu einem Schutz eines Bedieners (18a; 18f; 18k) vor Verletzungen durch das Schneidwerkzeug (12a-12k).

Es wird vorgeschlagen, dass die Sicherheitseinheit (16a-16i; 16k) zumindest eine Erfassungseinheit (20a-20f; 20k) zu einer elektrischen, insbesondere kapazitiven, und/oder optosensorischen, insbesondere kamerafremden, Erfassung zumindest eines Körperteils (22a; 22f; 22k) des Bedieners (18a; 18f; 18k) in einem Nahbereich (24a-24i; 24k) des Schneidwerkzeugs (12a-12i; 12k) umfasst, wobei in Abhängigkeit von der Erfassung eine Bewegung des Schneidwerkzeugs (12a-12i; 12k) abbremsbar ist.

## Beschreibung

### Stand der Technik

In der DE 10 2010 045 823 A1 ist bereits eine Lebensmittelschneidevorrichtung, insbesondere eine Brotschneidevorrichtung, mit zumindest einem Schneidwerkzeug zu einem Durchtrennen von Lebensmitteln und mit zumindest einer Sicherheitseinheit zu einem Schutz eines Bedieners vor Verletzungen durch das Schneidwerkzeug, vorgeschlagen worden. Die in der DE 10 2010 045 823 A1 offenbarte Sicherheitseinheit ist zu einer Erfassung zumindest eines Körperteils des Bedieners in einem Nahbereich des Schneidwerkzeugs mittels eines Kamerasystems oder mittels eines Radarsystems eingerichtet.

### Offenbarung der Erfindung

Die Erfindung geht aus von einer Lebensmittelschneidevorrichtung, insbesondere von einer Brotschneidevorrichtung, mit zumindest einem Schneidwerkzeug zu einem Durchtrennen von Lebensmitteln und mit zumindest einer Sicherheitseinheit zu einem Schutz eines Bedieners vor Verletzungen durch das Schneidwerkzeug.

Es wird vorgeschlagen, dass die Sicherheitseinheit zumindest eine Erfassungseinheit zu einer elektrischen, insbesondere kapazitiven, und/oder optosensorischen, insbesondere kamerafremden, Erfassung zumindest eines Körperteils des Bedieners in einem Nahbereich des Schneidwerkzeugs umfasst, wobei in Abhängigkeit von der Erfassung eine Bewegung des Schneidwerkzeugs abbremsbar ist.

Die Lebensmittelschneidevorrichtung ist vorzugsweise als eine Brotschneidevorrichtung ausgebildet. Die Lebensmittelschneidevorrichtung ist vorzugsweise zu einem Einsatz in einer Lebensmittelschneidemaschine, insbesondere einer Brotschneidemaschine, vorgesehen. Alternativ ist denkbar, dass die Lebensmittelschneidevorrichtung zu einem Einsatz in einer Aufschnittmaschine, in einem Kräuterhäcksler, in einem Mixer, in einem Fleischwolf oder in einer anderen, einem Fachmann als sinnvoll erscheinenden Lebensmittelschneidemaschine vorgesehen ist. Die Lebensmittelschneidevorrichtung ist vorzugsweise dazu vorgesehen, Lebensmittel zu durchtrennen, insbesondere in Scheiben zu schneiden. Bevorzugt ist die Lebensmittelschneidevorrichtung dazu vorgesehen, Backwaren, insbesondere Brot, zu durchtrennen. Alternativ ist vorstellbar, dass die Lebensmittelschneidevorrichtung dazu vorgesehen ist, Gemüse, Obst, Wurst, Schinken, Kräuter, Fleisch oder andere, einem Fachmann als sinnvoll erscheinende Lebensmittel zu durchtrennen. Insbesondere ist die Lebensmittelschneidevorrichtung verschieden von einer Werkzeugmaschine, insbesondere von einer Tischsäge, einer Gehrungssäge, einer Kreissäge, einer Bandsäge o. dgl., ausgebildet. Vorzugsweise ist die Lebensmittelschneidevorrichtung zu einem Einsatz in einem Umfeld, in dem Lebensmittel verarbeitet werden, insbesondere in einer Küche, vorgesehen. Unter "vorgesehen" soll insbesondere speziell ausgestattet und/oder eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.

Das Schneidwerkzeug ist vorzugsweise als ein, insbesondere scheibenförmiges, Schneidblatt ausgebildet. Alternativ ist denkbar, dass das Schneidwerkzeug als ein Rotationsmesser, als ein Walzenmesser o. dgl. ausgebildet ist. Bevorzugt ist das Schneidwerkzeug zumindest teilweise aus einem Metall ausgebildet. Vorzugsweise ist das Schneidwerkzeug lösbar an einer Antriebswelle der Lebensmittelschneidevorrichtung angeordnet. Insbesondere umfasst die Lebensmittelschneidevorrichtung zumindest eine Antriebseinheit, die dazu vorgesehen ist, die Antriebswelle zu einer Realisierung einer Bewegung, insbesondere einer Rotation, des Schneidwerkzeugs anzutreiben. Vorzugsweise ist die Antriebseinheit zumindest teilweise als ein Motor, insbesondere als ein Elektromotor, ausgebildet oder umfasst zumindest einen Motor, insbesondere einen Elektromotor. Vorzugsweise ist die Antriebseinheit zu einem Abbremsen einer Bewegung des Schneidwerkzeugs abschaltbar und/oder aktiv abbremsbar, beispielsweise mittels einer Kurzschlussbremsung, mittels einer Gegenstrombremsung o. dgl. Bevorzugt ist die Antriebseinheit zu einem Abbremsen einer Bewegung des Schneidwerkzeugs zusätzlich zu einem mechanischen Abbremsen des Schneidwerkzeugs abschaltbar und/oder aktiv abbremsbar.

Ein Bediener der Lebensmittelschneidevorrichtung schiebt zu einer Bedienung der Lebensmittelschneidevorrichtung vorzugsweise ein zu durchtrennendes Lebensmittel entlang des Schneidwerkzeugs. Insbesondere kann die Lebensmittelschneidevorrichtung zumindest ein Lebensmittelförderelement, beispielsweise einen Schlitten o. dgl., aufweisen, mittels dessen der Bediener das Lebensmittel bewegen kann. Alternativ ist denkbar, dass die Lebensmittelschneidevorrichtung ein automatisches Lebensmittelförderelement, beispielsweise einen motorisierten Schlitten o. dgl., aufweist. Insbesondere kann der Bediener bei einer Bedienung der Lebensmittelschneidevorrichtung mit zumindest einem Körperteil, insbesondere unbeabsichtigt und/oder unbemerkt, in einen Nahbereich des Schneidwerkzeugs gelangen. Unter einem "Nahbereich des Schneidwerkzeugs" soll insbesondere ein Bereich in einem Abstand von höchstens 1 cm von dem Schneidwerkzeug, insbesondere von einer Schneidkante des Schneidwerkzeugs, bevorzugt in einem Abstand von höchstens 0,5 cm von dem Schneidwerkzeug, insbesondere von einer Schneidkante des Schneidwerkzeugs, besonders bevorzugt von höchstens 0,1 cm von dem Schneidwerkzeug, insbesondere von einer Schneidkante des Schneidwerkzeugs, und ganz besonders bevorzugt ein mit dem Schneidwerkzeug, insbesondere mit einer Schneidkante des Schneidwerkzeugs, in Kontakt stehender Bereich verstanden werden. Insbesondere soll darunter, dass ein Körperteil in einem Nahbereich des Schneidwerkzeugs angeordnet ist auch verstanden werden, dass das Körperteil in Kontakt mit dem Schneidwerkzeug, insbesondere mit einer Schneidkante des Schneidwerkzeugs, steht. Insbesondere kann der Bediener bei einer Bedienung der Lebensmittelschneidevorrichtung mit einer Hand, insbesondere mit einem Finger der Hand, in einen Nahbereich des Schneidwerkzeugs gelangen.

Die Sicherheitseinheit ist vorzugsweise dazu eingerichtet, ernsthafte Verletzungen des Bedieners, insbesondere des Körperteils des Bedieners in dem Nahbereich des Schneidwerkzeugs, zu verhindern. Eine ernsthafte Verletzung kann insbesondere als eine Abtrennung eines Körperteils des Bedieners, beispielhaft eines Fingers des Bedieners, als ein Schnitt tiefer als maximal 4 mm in ein Körperteil des Bedieners, als eine Beschädigung einer Nervenbahn eines Körperteils des Bedieners o. dgl. ausgebildet sein. Vorzugsweise ist die Erfassungseinheit dazu eingerichtet, in Abhängigkeit von einer Erfassung eines Körperteils in einem Nahbereich des Schneidwerkzeugs zumindest ein, insbesondere elektronisches, Erfassungssignal bereitzustellen. Vorzugsweise umfasst die Sicherheitseinheit zumindest eine Elektronikeinheit, die insbesondere zu einer Auswertung des Erfassungssignals der Erfassungseinheit eingerichtet ist. Unter einer "Elektronikeinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Bevorzugt ist die Elektronikeinheit dazu eingerichtet, in Abhängigkeit von einer Auswertung des Erfassungssignals der Erfassungseinheit zumindest eine Bremseinheit der Sicherheitseinheit anzusteuern. Die Bremseinheit ist insbesondere dazu vorgesehen, eine Bewegung des Schneidwerkzeugs abzubremsen, vorzugsweise bis zu einem Stillstand des Schneidwerkzeugs. Vorzugsweise ist die Bremseinheit zu einem Abbremsen des Schneidwerkzeugs vorgesehen, das über eine reine Motorbremsung hinausgeht. Vorzugsweise ist die Bremseinheit zu einem mechanischen Abbremsen, insbesondere mittels eines Form- und/oder Reibschlusses, einer Bewegung des Schneidwerkzeugs vorgesehen. Die Bremseinheit ist insbesondere zu einem Abbremsen einer Bewegung des Schneidwerkzeugs bis zu einem Stillstand des Schneidwerkzeugs innerhalb von höchstens 500 ms, bevorzugt innerhalb von höchstens 200 ms, besonders bevorzugt innerhalb von höchstens 150 ms und ganz besonders bevorzugt innerhalb von höchstens 30 ms vorgesehen. Vorzugsweise weist die Bremseinheit zumindest ein Bremselement auf, das dazu vorgesehen ist, das Schneidwerkzeug zu einem Abbremsen einer Bewegung des Schneidwerkzeugs zu blockieren. Das Bremselement kann insbesondere als eine Bremsbacke, als ein Bremsbolzen, als eine Schlingfeder oder als ein anderes, einem Fachmann als sinnvoll erscheinendes Bremselement ausgebildet sein. Alternativ oder zusätzlich zu der Bremseinheit kann die Sicherheitseinheit dazu vorgesehen sein, in Abhängigkeit von einer Erfassung eines Körperteils des Bedieners in einem Nahbereich des Schneidwerkzeugs das Schneidwerkzeug von dem Körperteil zu beabstanden, insbesondere wegzuschwenken, das Körperteil des Bedieners von dem Schneidwerkzeug zu beabstanden o. dgl.

Eine zu einer elektrischen Erfassung zumindest eines Körperteils des Bedieners in einem Nahbereich des Schneidwerkzeugs eingerichtete Erfassungseinheit ist insbesondere zu einer Erfassung einer Änderung einer elektrischen Kapazität, einer elektrischen Spannung, eines elektrischen Stroms, einer elektrischen Induktion, einer Magnetresonanz o. dgl., insbesondere an dem Schneidwerkzeug, eingerichtet. Insbesondere kann sich ein Wert einer elektrischen Kenngröße in dem Nahbereich des Schneidwerkzeugs durch eine Annäherung an das Schneidwerkzeug und/oder durch eine Berührung des Schneidwerkzeugs durch ein Körperteil des Bedieners verändern. Vorzugsweise ist die Erfassungseinheit zu einer Erfassung zumindest eines Körperteils des Bedieners in einem Nahbereich des Schneidwerkzeugs in Abhängigkeit von einer Änderung eines Werts zumindest einer elektrischen Kenngröße in dem Nahbereich des Schneidwerkzeugs eingerichtet. Vorzugsweise ist die Elektronikeinheit dazu eingerichtet, die Änderung des Werts der elektrischen Kenngröße auszuwerten und insbesondere in Abhängigkeit von der Auswertung die Bremseinheit anzusteuern. Insbesondere können in der Speichereinheit der Elektronikeinheit Schwellwerte und/oder Schwellwertbereiche hinterlegt sein, wobei insbesondere bei einer Überschreitung eines Schwellwerts und/oder eines Schwellwertbereichs durch einen Wert zumindest einer elektrischen Kenngröße die Elektronikeinheit dazu eingerichtet ist, die Bremseinheit anzusteuern. Vorzugsweise umfasst die Erfassungseinheit zu einer elektrischen Erfassung zumindest eines Körperteils des Bedieners in dem Nahbereich des Schneidwerkzeugs zumindest eine in dem Nahbereich des Schneidwerkzeugs angeordnete Erfassungselektrode. Bevorzugt ist das Schneidwerkzeug selbst als eine Erfassungselektrode der Erfassungseinheit ausgebildet.

Eine zu einer optosensorischen Erfassung zumindest eines Körperteils des Bedieners in einem Nahbereich des Schneidwerkzeugs eingerichtete Erfassungseinheit weist insbesondere zumindest ein optisches Sensorelement auf. Vorzugsweise ist das optische Sensorelement verschieden von einer Kamera ausgebildet. Insbesondere ist das optische Sensorelement zu einer Erfassung von Strahlung mit Wellenlängen von höchstens 1 mm eingerichtet. Bevorzugt ist das optische Sensorelement zu einer Erfassung von Infrarotstrahlung eingerichtet. Alternativ oder zusätzlich ist denkbar, dass das optische Sensorelement zu einer Erfassung von Terahertzstrahlung, Röntgenstrahlung o. dgl. eingerichtet ist. Das optische Sensorelement kann insbesondere als ein Infrarotsensor, als ein Terahertzsensor, als eine Lichtschranke, als ein Laserscanner, als ein Lidar oder als ein anderes, einem Fachmann als sinnvoll erscheinendes optisches Sensorelement ausgebildet sein.

Durch die erfindungsgemäße Ausgestaltung der Lebensmittelschneidevorrichtung kann vorteilhaft ein Körperteil eines Bedieners in einem Nahbereich eines Schneidwerkzeugs erfasst werden und automatisch entsprechende Sicherheitsmaßnahmen eingeleitet werden. Vorteilhaft können schwere Verletzungen des Bedieners durch das Schneidwerkzeug der Lebensmittelschneidevorrichtung verhindert werden. Vorteilhaft kann eine hohe Sicherheit in einem Umfeld, in dem Lebensmittel verarbeitet werden, insbesondere in einer Küche, erreicht werden. Es kann eine vorteilhaft komfortabel und sicher nutzbare Lebensmittelschneidevorrichtung bereitgestellt werden.

Des Weiteren wird vorgeschlagen, dass die Erfassungseinheit als eine, insbesondere mit dem Schneidwerkzeug gekoppelte, kapazitive Erfassungseinheit ausgebildet ist. Vorzugsweise ist die kapazitive Erfassungseinheit elektrisch mit dem Schneidwerkzeug gekoppelt. Bevorzugt bildet das Schneidwerkzeug zumindest einen Teil der kapazitiven Erfassungseinheit aus. Insbesondere dient das Schneidwerkzeug als eine Erfassungselektrode der kapazitiven Erfassungseinheit. Insbesondere ist ein als eine Erfassungselektrode ausgebildetes Schneidwerkzeug elektrisch isoliert von der Antriebswelle an der Antriebswelle angeordnet. Alternativ ist denkbar, dass die kapazitive Erfassungseinheit eine in dem Nahbereich des Schneidwerkzeugs angeordnete separat von dem Schneidwerkzeug ausgebildete Erfassungselektrode, beispielhaft eine Antenne, aufweist. Vorzugsweise umfasst die kapazitive Erfassungseinheit zumindest ein Kopplungselement, das dazu vorgesehen ist, das Schneidwerkzeug mit einem elektrischen Signal, vorzugsweise mit einem Wechselsignal, zu beaufschlagen, insbesondere elektrisch zu laden. Das Kopplungselement kann insbesondere als ein direktes Kopplungselement oder als ein indirektes Kopplungselement ausgebildet sein. Ein direktes Kopplungselement kann insbesondere als ein Schleifkontakt, als ein Schleifring, als ein leitfähiges Kugellager oder als ein anderes, einem Fachmann als sinnvoll erscheinendes direktes Kopplungselement ausgebildet sein. Ein indirektes Kopplungselement kann insbesondere als eine Koppelplatte o. dgl. ausgebildet sein. Die kapazitive Erfassungseinheit funktioniert vorzugsweise nach einem Prinzip eines kapazitiven Sensors. Ein in dem Nahbereich des Schneidwerkzeugs angeordnetes Körperteil des Bedieners zieht insbesondere zumindest einen Teil einer elektrischen Ladung des Schneidwerkzeugs von dem Schneidwerkzeug. Ein Ladungsverlust des Schneidwerkzeugs ist insbesondere desto höher, je kleiner ein Abstand zwischen dem Körperteil und dem Schneidwerkzeug ist. Vorzugsweise weist die kapazitive Erfassungseinheit zumindest eine Messeinheit auf, die zu einer Messung einer Ladungsänderung des Schneidwerkzeugs eingerichtet ist. Die Messeinheit kann insbesondere zumindest teilweise als ein Strommessgerät, als ein Spannungsmessgerät, als eine Messschaltung, insbesondere als eine anwendungsspezifische integrierte Schaltung (ASIC), als ein Mikroprozessor o. dgl. ausgebildet sein. Vorzugsweise ist die Elektronikeinheit dazu eingerichtet, die von der Messeinheit gemessene Ladungsänderung des Schneidwerkzeugs zu einer Ansteuerung der Bremseinheit auszuwerten. Alternativ ist denkbar, dass die Messeinheit selbst dazu eingerichtet ist, die Ladungsänderung des Schneidwerkzeugs auszuwerten. Vorteilhaft kann eine besonders kompakt ausgebildete und zumindest im Wesentlichen unauffällig in die Lebensmittelschneidevorrichtung integrierbare Erfassungseinheit bereitgestellt werden. Vorteilhaft kann eine komfortable und präzise Erfassungseinheit bereitgestellt werden.

Ferner wird vorgeschlagen, dass die Erfassungseinheit zumindest ein Kopplungselement aufweist, das dazu vorgesehen ist, das Schneidwerkzeug kontaktlos elektrisch zu laden, wobei das Schneidwerkzeug einen Teil der Erfassungseinheit ausbildet. Vorzugsweise ist die Erfassungseinheit als eine kapazitive Erfassungseinheit ausgebildet. Insbesondere ist das Kopplungselement als ein indirektes Kopplungselement ausgebildet. Insbesondere ist das Kopplungselement als eine Koppelplatte ausgebildet. Die Koppelplatte ist insbesondere scheibenförmig, halbscheibenförmig, rechteckig, insbesondere quadratisch, o. dgl. ausgebildet. Vorzugsweise ist das Kopplungselement auf der Antriebswelle beabstandet von dem Schneidwerkzeug angeordnet. Insbesondere ist eine Haupterstreckungsebene des Kopplungselements zumindest im Wesentlichen parallel zu einer Haupterstreckungsebene des Schneidwerkzeugs angeordnet. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Das Kopplungselement ist vorzugsweise dazu vorgesehen, das Schneidwerkzeug kapazitiv mit einem elektrischen Signal zu beaufschlagen, insbesondere elektrisch aufzuladen. Vorteilhaft kann eine zumindest im Wesentlichen abnutzungsfreie elektrische Kopplung mit dem Schneidwerkzeug erreicht werden. Vorteilhaft kann eine langlebige und wartungsarme Lebensmittelschneidevorrichtung bereitgestellt werden.

Weiterhin wird vorgeschlagen, dass die Erfassungseinheit zumindest einen Kondensator umfasst, der zu einer Erfassung zumindest eines Körperteils des Bedieners in einem Nahbereich des Schneidwerkzeugs verstimmbar ist. Bevorzugt ist der Kondensator in dem Nahbereich des Schneidwerkzeugs angeordnet. Vorzugsweise umfasst die Erfassungseinheit zumindest einen elektrischen Schwingkreis, wobei der Kondensator insbesondere einen Teil des Schwingkreises ausbildet. Insbesondere weist der elektrische Schwingkreis zumindest einen Taktgenerator auf. Insbesondere ist der Taktgenerator dazu eingerichtet, einen Takt eines elektrischen Signals in dem elektrischen Schwingkreis vorzugeben. Insbesondere ist der Takt des elektrischen Signals in dem elektrischen Schwingkreis bei einer konstanten Vorgabe durch den Taktgenerator abhängig von einer Kapazität des Kondensators. Die Kapazität des Kondensators ist in Abhängigkeit von einem Körperteil des Bedieners in dem Nahbereich des Schneidwerkzeugs veränderbar. Insbesondere entspricht eine Veränderung der Kapazität des Kondensators einer Verstimmung des Kondensators und insbesondere des elektrischen Schwingkreises. Vorzugsweise ist die Messeinheit dazu eingerichtet, eine Verstimmung des Kondensators bzw. des elektrischen Schwingkreises zu erfassen. Der Kondensator weist vorzugsweise zumindest zwei elektrisch leitfähige Hülsen auf, die voneinander beabstandet an der Antriebswelle angeordnet sind. Vorzugsweise sind die Hülsen elektrisch von der Antriebswelle isoliert. Vorzugsweise ist das Schneidwerkzeug elektrisch leitfähig mit der Antriebswelle verbunden und dient insbesondere als ein Dielektrikum des Kondensators, der zumindest teilweise durch die Hülsen ausgebildet ist. Insbesondere ist eine Dielektrizitätskonstante des Schneidwerkzeugs abhängig von einem Abstand eines Körperteils des Bedieners von dem Schneidwerkzeug. Insbesondere ist die Kapazität des Kondensators abhängig von der Dielektrizitätskonstante des Schneidwerkzeugs. Insbesondere ändert sich in Abhängigkeit von einer Annäherung eines Körperteils des Bedieners an das Schneidwerkzeug die Dielektrizitätskonstante des Schneidwerkzeugs und die Kapazität des Kondensators, die von der Messeinheit erfassbar ist. Alternativ zu Hülsen ist denkbar, dass der Kondensator zumindest zwei voneinander beabstandet angeordnete elektrisch leitfähige Platten aufweist. Die Platten können auf einer gleichen Seite des Schneidwerkzeugs oder jeweils auf voneinander abgewandten Seiten des Schneidwerkzeugs angeordnet sein. Vorteilhaft kann eine weitere Möglichkeit zu einer elektrischen Erfassung eines Körperteils des Bedieners in dem Nahbereich des Schneidwerkzeugs bereitgestellt werden.

Zudem wird vorgeschlagen, dass die Lebensmittelschneidevorrichtung zumindest ein Lebensmittelförderelement umfasst, mit dem die Erfassungseinheit zu einer Erfassung eines geschlossenen Stromkreises zwischen dem Schneidwerkzeug und einem Körperteil des Bedieners elektrisch leitend verbunden ist. Vorzugsweise ist das Lebensmittelförderelement elektrisch leitfähig ausgebildet, beispielsweise zumindest teilweise aus einem Metall. Insbesondere ist das Lebensmittelförderelement als ein manuell bedienbares Lebensmittelförderelement, insbesondere als ein Schlitten, ausgebildet. Vorzugsweise sind die Messeinheit und eine elektrische Spannungsquelle der Erfassungseinheit elektrisch leitfähig mit dem Lebensmittelförderelement und mit dem Schneidwerkzeug verbunden. Vorzugsweise berührt der Bediener während einer Bedienung der Lebensmittelschneidevorrichtung das Lebensmittelförderelement und ist insbesondere elektrisch leitend mit dem Lebensmittelförderelement verbunden. Insbesondere schließt der Bediener durch eine Berührung des Schneidwerkzeugs einen Stromkreis zwischen dem Schneidwerkzeug, dem Lebensmittelförderelement, der Messeinheit und der elektrischen Spannungsquelle. Insbesondere kann in Folge einer Berührung des Schneidwerkzeugs durch den Bediener ein von der elektrischen Spannungsquelle bereitgestellter elektrischer Strom durch den geschlossenen Stromkreis fließen. Die Messeinheit ist vorzugsweise dazu eingerichtet, einen elektrischen Stromfluss zu erfassen. Vorteilhaft kann eine weitere Möglichkeit zu einer elektrischen Erfassung zumindest eines Körperteils des Bedieners in dem Nahbereich des Schneidwerkzeugs bereitgestellt werden. Vorteilhaft kann eine Erfassungseinheit zu einer präzisen Berührungserkennung bereitgestellt werden.

Des Weiteren wird vorgeschlagen, dass die Erfassungseinheit zu einer optosensorischen Erfassung zumindest eines Körperteils des Bedieners in einem Nahbereich des Schneidwerkzeugs als eine Infrarot-Erfassungseinheit, insbesondere als eine Nahinfrarot-Erfassungseinheit, ausgebildet ist. Bevorzugt ist die Infrarot-Erfassungseinheit als eine Nahinfrarot-Erfassungseinheit ausgebildet. Alternativ oder zusätzlich ist denkbar, dass die Infrarot-Erfassungseinheit als eine Mittelinfrarot-Erfassungseinheit oder als eine Ferninfrarot-Erfassungseinheit ausgebildet ist. Insbesondere ist die Infrarot-Erfassungseinheit zu einer Ausstrahlung und zu einer Erfassung von Infrarotstrahlung in einem Wellenlängenbereich zwischen 0,78 µm und 1000 µm, bevorzugt in einem Wellenlängenbereich zwischen 0,78 µm und 50 µm, besonders bevorzugt in einem Wellenlängenbereich zwischen 0,78 µm und 3 µm und ganz besonders bevorzugt in einem Wellenlängenbereich zwischen 0,78 µm und 1,4 µm eingerichtet. Vorzugsweise umfasst die Infrarot-Erfassungseinheit zumindest ein Infrarot-Sensorelement, das zu einer Ausstrahlung und zu einer Erfassung von Infrarotstrahlung eingerichtet ist. Alternativ ist vorstellbar, dass das Infrarot-Sensorelement lediglich zu einer Erfassung von Infrarotstrahlung eingerichtet ist und die Infrarot-Erfassungseinheit zumindest eine separat von dem Infrarot-Sensorelement ausgebildete Strahlungsquelle aufweist, die zu einer Ausstrahlung von Infrarotstrahlung eingerichtet ist. Vorzugsweise ist das Infrarot-Sensorelement dazu eingerichtet, von einem Körperteil des Bedieners reflektierte Infrarotstrahlung zu erfassen. Insbesondere ist die Erfassungseinheit dazu eingerichtet, in Abhängigkeit von reflektierter Infrarotstrahlung ein Körperteil des Bedieners von einem zu durchtrennenden Lebensmittel zu unterscheiden. Insbesondere weist ein zu durchtrennendes Lebensmittel, insbesondere Brot, unterschiedliche Absorptionscharakteristika und/oder Reflektionscharakteristika als ein Körperteil des Bedieners, insbesondere eine Haut des Körperteils des Bedieners, auf. Vorzugsweise weist das Infrarot-Sensorelement einen, insbesondere zumindest im Wesentlichen kegelförmigen, Erfassungsbereich auf. Vorzugsweise ist der Erfassungsbereich in dem Nahbereich des Schneidwerkzeugs angeordnet. Bevorzugt ist das Infrarot-Sensorelement derart angeordnet, dass eine Haupterstreckungsrichtung des Erfassungsbereichs quer zu einer Vorschubrichtung des zu durchtrennenden Lebensmittels, insbesondere des Lebensmittelförderelements, verläuft. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt. Insbesondere weist der Erfassungsbereich des Infrarot-Sensorelements einen maximalen Durchmesser von höchstens 10 cm, bevorzugt von höchstens 5 cm und besonders bevorzugt von höchstens 2 cm auf. Vorteilhaft kann eine optosensorische Erfassung zumindest eines Körperteils des Bedieners in dem Nahbereich des Schneidwerkzeugs ermöglicht werden. Vorteilhaft kann auf elektrische Verbindungen verzichtet werden.

Ferner wird vorgeschlagen, dass die Erfassungseinheit zu einer zumindest im Wesentlichen vollständigen sensorischen Abdeckung des Nahbereichs des Schneidwerkzeugs zumindest zwei voneinander beabstandet angeordnete Infrarot-Sensorelemente umfasst. Insbesondere umfasst die Infrarot-Erfassungseinheit zumindest zwei voneinander beabstandet angeordnete Infrarot-Sensorelemente. Vorzugsweise sind die Infrarot-Sensorelemente entlang der Vorschubrichtung des Lebensmittelförderelements beabstandet voneinander angeordnet. Insbesondere ist ein erstes Infrarot-Sensorelement entlang der Vorschubrichtung des Lebensmittelförderelements betrachtet vor dem Schneidwerkzeug angeordnet. Insbesondere ist ein zweites Infrarot-Sensorelement entlang der Vorschubrichtung des Lebensmittelförderelements betrachtet hinter dem Schneidwerkzeug angeordnet. Vorzugsweise sind ein Erfassungsbereich des ersten Infrarot-Sensorelements und ein Erfassungsbereich des zweiten Infrarot-Sensorelements quer zueinander angeordnet. Insbesondere überlappen sich der Erfassungsbereich des ersten Infrarot-Sensorelements und der Erfassungsbereich des zweiten Infrarot-Sensorelements zumindest abschnittsweise. Vorteilhaft kann eine zumindest im Wesentlichen vollständige sensorische Abdeckung des Nahbereichs des Schneidwerkzeugs erreicht werden. Es kann eine vorteilhaft sichere Lebensmittelschneidevorrichtung mit einer Infrarot-Erfassungseinheit bereitgestellt werden.

Alternativ oder zusätzlich zu einer Erfassungseinheit, die zu einer elektrischen und/oder optosensorischen Erfassung zumindest eines Körperteils des Bedieners in dem Nahbereich des Schneidwerkzeugs eingerichtet ist, kann die Sicherheitseinheit auch eine radarbasierte und/oder kamerabasierte Erfassungseinheit aufweisen. Eine radarbasierte Erfassungseinheit weist vorzugsweise zumindest ein Radarsensorelement auf. Das Radarsensorelement ist insbesondere zu einer Ausstrahlung und zu einer Erfassung von Strahlung in einem Wellenlängenbereich zwischen 1 mm und 1 cm eingerichtet. Hinsichtlich einer weiteren Ausbildung und/oder Funktionsweise ist die radarbasierte Erfassungseinheit vorzugsweise zumindest im Wesentlichen analog zu der Infrarot-Erfassungseinheit ausgebildet. Eine kamerabasierte Erfassungseinheit weist vorzugsweise zumindest eine Kamera auf. Die Kamera ist insbesondere zu einer bildgebenden Überwachung des Nahbereichs des Schneidwerkzeugs eingerichtet.

Weiterhin wird vorgeschlagen, dass die Sicherheitseinheit zumindest ein Wahlelement zu einer Einstellung eines Betriebsverhaltens der Erfassungseinheit in Abhängigkeit von einem zu durchtrennenden Lebensmittel aufweist. Das Wahlelement ist vorzugsweise als ein Schalter, beispielsweise als ein Drehschalter, als ein Schiebeschalter, als ein berührungssensitiver Schalter o. dgl., ausgebildet. Insbesondere ist das Wahlelement dazu eingerichtet, die Erfassungseinheit unabhängig von weiteren Komponenten der Lebensmittelschneidevorrichtung zu deaktivieren. Vorzugsweise ist das Wahlelement zu einer Anpassung einer Sensitivität der Erfassungseinheit passend zu dem zu durchtrennenden Lebensmittel eingerichtet. Insbesondere ist das Wahlelement zu einer Anpassung von Schwellwerten und/oder Schwellwertbereichen der Erfassung passend zu dem zu durchtrennenden Lebensmittel eingerichtet. Insbesondere ist das Wahlelement zu einer Einstellung des Betriebsverhaltens der Erfassungseinheit in Abhängigkeit von einer Ähnlichkeit des zu durchtrennenden Lebensmittels mit einem Körperteil des Bedieners eingerichtet. Insbesondere weisen unterschiedliche zu durchtrennende Lebensmittel und ein Körperteil des Bedieners unterschiedliche Eigenschaften auf, die sich auf eine Erfassung auswirken. Eine Eigenschaft eines zu durchtrennenden Lebensmittels und/oder eines Körperteils des Bedieners kann insbesondere als eine elektrische Leitfähigkeit, als eine Strahlungsabsorptivität, als eine Strahlungsreflektivität, als ein Feuchtigkeitsgehalt oder als eine andere, einem Fachmann als sinnvoll erscheinende Eigenschaft ausgebildet sein. Insbesondere ist denkbar, dass beispielsweise eine zu durchtrennende Wurst unterschiedliche Eigenschaften, insbesondere zu Eigenschaften eines Körperteils des Bedieners ähnlichere Eigenschaften, aufweist als ein zu durchtrennendes Brot. Vorteilhaft kann eine auf ein zu durchtrennendes Lebensmittel zugeschnittene Erfassung ermöglicht werden. Vorteilhaft kann eine bedienersichere und fehlauslösungsarme Lebensmittelschneidevorrichtung bereitgestellt werden.

Zudem wird vorgeschlagen, dass die Erfassungseinheit dazu eingerichtet ist, in Abhängigkeit von einer Bewegung des Schneidwerkzeugs, insbesondere unabhängig von einem Antrieb des Schneidwerkzeugs, zumindest ein Körperteil des Bedieners in einem Nahbereich des Schneidwerkzeugs zu erfassen. Vorzugsweise ist die Erfassungseinheit während einer Bewegung des Schneidwerkzeugs dauerhaft aktiviert und zu einer Erfassung eines Körperteils des Bedieners in dem Nahbereich des Schneidwerkzeugs eingerichtet. Insbesondere ist die Erfassungseinheit während einer passiven Bewegung des Schneidwerkzeugs aktiviert und zu einer Erfassung eines Körperteils des Bedieners in dem Nahbereich des Schneidwerkzeugs eingerichtet. Unter einer "passiven Bewegung" des Schneidwerkzeugs soll insbesondere eine Bewegung des Schneidwerkzeugs ohne einen aktiven Antrieb des Schneidwerkzeugs verstanden werden, beispielhaft ein Auslaufen des Schneidwerkzeugs nach einem Abschalten der Antriebseinheit. Vorzugsweise umfasst die Sicherheitseinheit zumindest ein Bewegungssensorelement zu einer Erfassung einer Bewegung des Schneidwerkzeugs. Insbesondere ist die Erfassungseinheit in Abhängigkeit von einem Signal des Bewegungssensorelements aktivierbar und/oder deaktivierbar. Das Bewegungssensorelement kann insbesondere als ein elektromagnetisches Bewegungssensorelement, beispielsweise als ein Hall-Sensor, als ein optisches Bewegungssensorelement oder als ein anderes, einem Fachmann als sinnvoll erscheinendes Bewegungssensorelement ausgebildet sein. Vorteilhaft kann eine Aktivierung bzw. Deaktivierung der Erfassungseinheit unabhängig von der Antriebseinheit ausgebildet werden. Vorteilhaft kann eine Sicherheit der Lebensmittelschneidevorrichtung weiter erhöht werden.

Zudem wird vorgeschlagen, dass die Sicherheitseinheit zumindest ein Bremselement aufweist, das zu einem Abbremsen einer Bewegung des Schneidwerkzeugs mittels eines Formschlusses und/oder eines Reibschlusses vorgesehen ist. Vorzugsweise weist die Bremseinheit der Sicherheitseinheit das Bremselement auf. Vorzugsweise ist das Bremselement zu einem Abbremsen einer Bewegung des Schneidwerkzeugs mittels eines Formschlusses und/oder eines Reibschlusses mit dem Schneidwerkzeug und/oder mit der Antriebswelle vorgesehen. Vorzugsweise ist das Bremselement dazu vorgesehen, das Schneidwerkzeug mittels eines Formschlusses und/oder eines Reibschlusses derart abzubremsen, dass sich das, insbesondere rotierende, Schneidwerkzeug nach einer Erfassung eines Körperteils des Bedieners in dem Nahbereich des Schneidwerkzeugs um maximal 120°, bevorzugt um maximal 50° und besonders bevorzugt um maximal 30° weiterbewegt bevor das Schneidwerkzeug zum Stillstand kommt, insbesondere unter Nichtberücksichtigung von Fertigungstoleranzen. Das Bremselement weist insbesondere einen Reibungskoeffizienten von zumindest 0,3, bevorzugt von zumindest 0,4 und besonders bevorzugt von zumindest 0,5 auf.

Vorzugsweise umfasst die Bremseinheit zumindest einen Aktor, der dazu vorgesehen ist, das Bremselement in Kontakt mit dem Schneidwerkzeug und/oder mit der Antriebswelle zu bewegen, beispielhaft über eine Schubstange. Der Aktor kann insbesondere als ein Hubmagnet, als ein Piezokristall, als ein Formgedächtnismetall, als ein Stellmotor oder als ein anderer, einem Fachmann als sinnvoll erscheinender Aktor ausgebildet sein. Der Aktor kann insbesondere als ein Direktantrieb ausgebildet sein oder die Bremseinheit kann zu einer Unterstützung des Aktors ein Getriebe, Zahnräder, Hebel o. dgl. aufweisen. Vorzugsweise ist das Schneidwerkzeug derart steif ausgebildet, dass das Schneidwerkzeug einem Kontakt mit dem Bremselement, insbesondere in einer Richtung zumindest im Wesentlichen senkrecht zu der Haupterstreckungsebene des Schneidwerkzeugs, zumindest im Wesentlichen verformungsfrei standhält. Der Ausdruck "im Wesentlichen senkrecht" soll insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Alternativ oder zusätzlich ist denkbar, dass die Bremseinheit zumindest ein Gegenhalterelement aufweist, das auf einer dem Bremselement abgewandten Seite des Schneidwerkzeugs angeordnet ist, dass die Bremseinheit als eine Zangenbremse ausgebildet ist, die zumindest zwei Bremselemente aufweist, die auf voneinander abgewandten Seiten des Schneidwerkzeugs angeordnet sind, o. dgl. Vorzugsweise umfasst die Bremseinheit zumindest ein Rückstellelement, beispielhaft eine Feder, das dazu vorgesehen ist, einen Formschluss und/oder Reibschluss nach einem Abbremsen des Schneidwerkzeugs zu lösen. Vorteilhaft kann ein schnelleres Abbremsen einer Bewegung des Schneidwerkzeugs als mit einer reinen Motorbremsung erreicht werden. Vorteilhaft können ernsthafte Verletzungen des Bedieners durch das Schneidwerkzeug verhindert werden.

Des Weiteren wird vorgeschlagen, dass die Sicherheitseinheit zumindest ein Bremselement aufweist, das zu einem Abbremsen einer Bewegung des Schneidwerkzeugs bis zu einem Stillstand des Schneidwerkzeugs innerhalb von höchstens 15 Millisekunden nach einem Eindringen zumindest eines Körperteils des Bedieners in den Nahbereich des Schneidwerkzeugs vorgesehen ist. Vorzugsweise weist die Bremseinheit der Sicherheitseinheit das Bremselement auf. Insbesondere ist das Bremselement zu einem Abbremsen des Schneidwerkzeugs innerhalb von höchstens 15 ms nach einem Eindringen zumindest eines Körperteils des Bedieners in den Nahbereich des Schneidwerkzeugs mittels eines Reibschlusses und/oder eines Formschlusses vorgesehen. Insbesondere ist die Erfassungseinheit dazu eingerichtet, ein Körperteil des Bedieners in dem Nahbereich des Schneidwerkzeugs innerhalb von höchstens 3 ms nach einem Eindringen des Körperteils in den Nahbereich des Schneidwerkzeugs zu erfassen. Insbesondere ist der Aktor dazu vorgesehen, das Bremselement innerhalb von höchstens 3 ms nach einer Erfassung des Körperteils in dem Nahbereich des Schneidwerkzeugs mit dem Schneidwerkzeug und/oder mit der Antriebswelle in Kontakt zu bringen. Insbesondere ist das Bremselement dazu vorgesehen, eine Bewegung des Schneidwerkzeugs innerhalb von höchstens 9 ms nach einem ersten Kontakt mit dem Schneidwerkzeug bis zu einem Stillstand des Schneidwerkzeugs abzubremsen. Vorteilhaft kann ein besonders schnelles Abbremsen einer Bewegung des Schneidwerkzeugs erreicht werden.

Ferner wird vorgeschlagen, dass die Lebenmittelschneidevorrichtung zumindest eine Antriebswelle zu einem, insbesondere rotierenden, Antrieb des Schneidwerkzeugs umfasst, wobei die Sicherheitseinheit zumindest ein Bremselement umfasst, das zu einem Abbremsen einer Bewegung des Schneidwerkzeugs in Abhängigkeit von einem Signal der Erfassungseinheit mit der Antriebswelle in Eingriff bringbar ist. Die Antriebswelle ist insbesondere als die von der Antriebseinheit antreibbare Antriebswelle ausgebildet. Vorzugsweise umfasst die Bremseinheit der Sicherheitseinheit das Bremselement. Das Bremselement ist bevorzugt als ein Bremsbolzen ausgebildet. Alternativ ist denkbar, dass das Bremselement als eine Bremsbacke, als ein Bremsstift, als ein Bremshebel o. dgl. ausgebildet ist. Vorzugsweise ist das Bremselement dazu vorgesehen, zu einem Abbremsen einer Bewegung des Schneidwerkzeugs einen mittelbaren Formschluss mit der Antriebswelle, insbesondere mit einer an der Antriebswelle fixierten Bremshülse, zu bilden. Die Bremshülse ist insbesondere zumindest im Wesentlichen hülsenförmig um die Antriebswelle angeordnet. Bevorzugt ist die Bremshülse einstückig mit der Antriebswelle ausgebildet. Unter "einstückig" soll insbesondere zumindest stoff-schlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Alternativ ist denkbar, dass das Bremselement dazu vorgesehen ist, einen unmittelbaren Formschluss mit der Antriebswelle zu bilden. Vorzugsweise weist die Bremshülse entlang eines zumindest im Wesentlichen kompletten maximalen Umfangs der Bremshülse, insbesondere zumindest im Wesentlichen senkrecht zu einer Längsachse der Antriebswelle, Einkerbungen auf, in die das Bremselement eingreifen kann. Eine "Längsachse" eines, insbesondere zumindest im Wesentlichen zylinderförmigen, Objekts ist insbesondere eine Achse, welche zumindest im Wesentlichen senkrecht zu einer durch Zylinderradien des Objekts aufgespannten Querschnittsfläche des Objekts ausgerichtet ist. Die Einkerbungen sind vorzugsweise zu einer formschlüssigen Aufnahme des Bremselements vorgesehen. Insbesondere umfasst die Bremshülse entlang des zumindest im Wesentlichen kompletten maximalen Umfangs der Bremshülse um höchstens 120° voneinander beabstandete Einkerbungen, bevorzugt um höchstens 50° voneinander beabstandete Einkerbungen und besonders bevorzugt um höchstens 30° voneinander beabstandete Einkerbungen. Vorteilhaft kann eine weitere mechanische Bremsmöglichkeit bereitgestellt werden.

Weiterhin wird vorgeschlagen, dass die Sicherheitseinheit zumindest ein Bremselement umfasst, das zu einem Abbremsen einer Bewegung des Schneidwerkzeugs in Abhängigkeit von einem Signal der Erfassungseinheit mit einer Schneidkante des Schneidwerkzeugs, insbesondere mit an der Schneidkante angeordneten Schneidzähnen, in Eingriff bringbar ist. Vorzugsweise umfasst die Bremseinheit der Sicherheitseinheit das Bremselement. Bevorzugt ist das Bremselement als eine Bremsbacke ausgebildet. Die Schneidkante des Schneidwerkzeugs ist insbesondere als eine scharfe Kante des Schneidwerkzeugs ausgebildet, mittels der das Schneidwerkzeug ein zu durchtrennendes Lebensmittel durchtrennen kann. Vorzugsweise ist die Schneidkante durch einen Schliff der Schneidkante und/oder durch an der Schneidkante angeordnete Schneidzähne scharf ausgebildet. Vorzugsweise erstreckt sich die Schneidkante entlang eines zumindest im Wesentlichen kompletten maximalen Umfangs des Schneidwerkzeugs, insbesondere zumindest im Wesentlichen in der Haupterstreckungsebene des Schneidwerkzeugs. Insbesondere ist das Bremselement zu einem Eingriff mit der Schneidkante des Schneidwerkzeugs zumindest im Wesentlichen parallel zu, insbesondere innerhalb der, Haupterstreckungsebene des Schneidwerkzeugs an das Schneidwerkzeug bewegbar. Vorteilhaft kann eine zusätzliche mechanische Bremsmöglichkeit bereitgestellt werden.

Zudem wird vorgeschlagen, dass die Sicherheitseinheit zumindest ein als eine Schlingfeder ausgebildetes Bremselement umfasst, das zu einem Abbremsen einer Bewegung des Schneidwerkzeugs in Abhängigkeit von einem Signal der Erfassungseinheit, insbesondere magnetisch, anziehbar ist. Vorzugsweise weist die Bremseinheit der Sicherheitseinheit das Bremselement auf. Vorzugsweise ist das Bremselement zumindest abschnittsweise schraubenartig um die Antriebswelle herum angeordnet. Insbesondere ist ein Ende des Bremselements an einem Gehäuse der Lebensmittelschneidevorrichtung fixiert. Insbesondere ist ein weiteres Ende des Bremselements mit dem Aktor der Bremseinheit verbunden. Bevorzugt ist der Aktor als ein Elektromagnet, insbesondere als ein Hubmagnet, ausgebildet. Zu einem Abbremsen einer Bewegung des Schneidwerkzeugs ist der Aktor vorzugsweise dazu vorgesehen, das Bremselement, insbesondere das weitere Ende des Bremselements, anzuziehen. Insbesondere liegt das Bremselement in einem angezogenen Zustand des Bremselements an der Antriebswelle an und bildet einen Reibschluss mit der Antriebswelle. Vorteilhaft kann eine weitere mechanische Bremsmöglichkeit bereitgestellt werden.

Des Weiteren wird vorgeschlagen, dass die Sicherheitseinheit zumindest eine Energiespeichereinheit aufweist, die zu einer Kraftbeaufschlagung zumindest eines Bremselements der Sicherheitseinheit, insbesondere zu einer Realisierung eines Eingriffs mit dem Schneidwerkzeug innerhalb von höchstens 7 Millisekunden nach einem Signalempfang von der Erfassungseinheit, vorgesehen ist. Vorzugsweise ist die Energiespeichereinheit zu einer Speicherung von, insbesondere mechanischer, Energie vorgesehen. Insbesondere ist die Energiespeichereinheit dazu vorgesehen, das Bremselement vorzuspannen. Insbesondere kann die Energiespeichereinheit als eine Druckfeder ausgebildet sein, die das Bremselement zu einer Bewegung in Richtung des Schneidwerkzeugs und/oder der Antriebswelle vorspannt. Vorzugsweise weist die Bremseinheit zumindest ein Rückhalteelement auf, das dazu vorgesehen ist, das Bremselement gegen die Kraft der Energiespeichereinheit zurückzuhalten. Das Rückhalteelement kann insbesondere als eine Schmelzsicherung, als ein Hubmagnet, als ein Stellmotor o. dgl. ausgebildet sein. Insbesondere kann der Aktor als ein Rückhalteelement ausgebildet sein. In Abhängigkeit von einem Signalempfang von der Erfassungseinheit kann insbesondere das Rückhalteelement gelöst werden, beispielsweise eine Schmelzsicherung geschmolzen werden oder eine Bestromung eines Aktors unterbrochen werden. Ohne eine Rückhaltung kann die Energiespeichereinheit insbesondere die gespeicherte Energie in Form einer Kraftbeaufschlagung des Bremselements freisetzen und das Bremselement gegen das Schneidwerkzeug und/oder die Antriebswelle bewegen. Insbesondere ist die Energiespeichereinheit dazu vorgesehen, das Bremselement innerhalb von höchstens 7 ms nach einem Signalempfang von der Erfassungseinheit, bevorzugt innerhalb von höchstens 5 ms nach einem Signalempfang von der Erfassungseinheit und besonders bevorzugt innerhalb von höchstens 3 ms nach einem Signalempfang von der Erfassungseinheit mit dem Schneidwerkzeug und/oder mit der Antriebswelle in Eingriff zu bringen. Vorteilhaft kann eine besonders schnelle Reaktion auf ein Signal der Erfassungseinheit erreicht werden.

Ferner wird vorgeschlagen, dass die Sicherheitseinheit in Abhängigkeit von einem erfassten Abstand eines Körperteils des Bedieners von dem Schneidwerkzeug zu einer Einleitung von unterschiedlichen, insbesondere kaskadierten, Bremsmaßnahmen eingerichtet ist. Vorzugsweise ist die Elektronikeinheit der Sicherheitseinheit in Abhängigkeit von einem erfassten Abstand eines Körperteils des Bedieners von dem Schneidwerkzeug zu einer Einleitung von unterschiedlichen, insbesondere kaskadierten, Bremsmaßnahmen eingerichtet. Vorzugsweise ist die Erfassungseinheit dazu eingerichtet, einen Abstand des Körperteils des Bedieners von dem Schneidwerkzeug zu erfassen und/oder die Elektronikeinheit ist dazu eingerichtet, in Abhängigkeit von einem Signal der Erfassungseinheit einen Abstand des Körperteils von dem Schneidwerkzeug zu ermitteln. Insbesondere ist ein einzelnes Sensorelement der Erfassungseinheit dazu eingerichtet, unterschiedliche Abstände des Körperteils von dem Schneidwerkzeug zu ermitteln. Alternativ oder zusätzlich ist denkbar, dass die Erfassungseinheit eine Mehrzahl von in unterschiedlichen Abständen zu dem Schneidwerkzeug angeordneten Sensorelementen aufweist oder dass die Erfassungseinheit unterschiedliche Sensorelemente zu einer Erfassung von unterschiedlichen Abständen des Körperteils von dem Schneidwerkzeug aufweist. Beispielsweise ist denkbar, dass die Erfassungseinheit ein Infrarot-Sensorelement zu einer Erfassung einer Annäherung des Körperteils an das Schneidwerkzeug und ein kapazitives Sensorelement zu einer Erfassung eines Kontakts des Körperteils mit dem Schneidwerkzeug aufweist.

Bevorzugt ist die Sicherheitseinheit, insbesondere die Elektronikeinheit, dazu eingerichtet, je geringer der erfasste Abstand zwischen dem Körperteil und dem Schneidwerkzeug ist, desto schneller zu einem Abbremsen einer Bewegung des Schneidwerkzeugs führende Bremsmaßnahmen einzuleiten. Beispielsweise kann die Sicherheitseinheit, insbesondere die Elektronikeinheit, in Abhängigkeit von einer Annäherung des Körperteils an das Schneidwerkzeug zu einer Einleitung einer Motorbremsung eingerichtet sein. Beispielsweise kann die Sicherheitseinheit, insbesondere die Elektronikeinheit, in Abhängigkeit von einem Kontakt des Körperteils mit dem Schneidwerkzeug zu einer Einleitung einer mechanischen Bremsung eingerichtet sein. Unter "kaskadierten Bremsmaßnahmen" sollen insbesondere mehrere, insbesondere unterschiedliche, Bremsmaßnahmen verstanden werden, die aufeinanderfolgend eingeleitet werden. Beispielsweise kann die Sicherheitseinheit, insbesondere die Elektronikeinheit, dazu eingerichtet sein, bei einer Annäherung des Körperteils an das Schneidwerkzeug die Antriebseinheit zu deaktivieren, bei einer weiteren Annäherung des Körperteils an das Schneidwerkzeug eine Motorbremsung einzuleiten und bei einem Kontakt des Körperteils mit dem Schneidwerkzeug eine mechanische Bremsung einzuleiten. Vorteilhaft kann ein Abbremsen einer Bewegung des Schneidwerkzeugs in Abhängigkeit von einem Abstand eines Körperteils eines Bedieners von dem Schneidwerkzeug ermöglicht werden. Vorteilhaft können Fehlauslösungen und eine Abnutzung der Bremseinheit gering gehalten werden.

Weiterhin wird vorgeschlagen, dass die Sicherheitseinheit zumindest ein Trennelement aufweist, das in Abhängigkeit von einer Erfassung zumindest eines Körperteils des Bedieners in einem Nahbereich des Schneidwerkzeugs zu einer automatischen räumlichen Beabstandung des Körperteils des Bedieners von dem Schneidwerkzeug vorgesehen ist. Es ist denkbar, dass die Lebensmittelschneidevorrichtung zur Lösung der erfindungsgemäßen Aufgabe in einer alternativen Ausgestaltung unabhängig von der Bremseinheit ausgebildet ist. Vorzugsweise umfasst die Lebensmittelschneidevorrichtung in der alternativen Ausgestaltung, insbesondere in der unabhängig von der Bremseinheit ausgebildeten Ausgestaltung, zumindest das Trennelement. Vorzugsweise ist das Trennelement in Abhängigkeit von einem Signal der Erfassungseinheit zwischen das Schneidwerkzeug und das Körperteil des Bedieners bewegbar. Insbesondere ist das Trennelement dazu vorgesehen, das Schneidwerkzeug, insbesondere die Schneidkante des Schneidwerkzeugs, zumindest teilweise abzudecken. Insbesondere ist das Trennelement dazu vorgesehen, das Körperteil des Bedieners von dem Schneidwerkzeug wegzudrücken. Vorzugsweise weist die Sicherheitseinheit zumindest einen Aktor und/oder eine Energiespeichereinheit zu einer Kraftbeaufschlagung des Trennelements auf. Das Trennelement kann insbesondere als ein Sicherheitsbügel, als ein Sicherheitsblech, als eine Schutzhaube, als ein, insbesondere automatisch aufblasbares, Luftkissen o. dgl. ausgebildet sein. Alternativ oder zusätzlich ist denkbar, dass eine Schnitttiefeneinstellungseinheit der Lebensmittelschneidevorrichtung, die insbesondere zu einer Einstellung einer Stärke abzutrennender Scheiben eines zu durchtrennenden Lebensmittels vorgesehen ist, als ein Trennelement dient. Insbesondere ist denkbar, dass die Schnitttiefeneinstellungseinheit in Abhängigkeit von einer Erfassung eines Körperteils des Bedieners in dem Nahbereich des Schneidwerkzeugs automatisch vor die Schneidkante des Schneidwerkzeugs fahrbar ist. Vorteilhaft kann eine sicher nutzbare Lebensmittelschneidevorrichtung, insbesondere ohne Verwendung eines Bremselements, bereitgestellt werden.

Zudem geht die Erfindung aus von einem Lebensmittelschneidesystem mit zumindest einer Lebensmittelschneidevorrichtung, insbesondere einer erfindungsgemäßen Lebensmittelschneidevorrichtung, und mit zumindest einer mit zumindest einem Bediener der Lebensmittelschneidevorrichtung koppelbare Übermittlungseinheit.

Es wird vorgeschlagen, dass die Übermittlungseinheit dazu eingerichtet ist, zumindest ein von zumindest einer Sicherheitseinheit der Lebensmittelschneidevorrichtung in einem Nahbereich zumindest eines Schneidwerkzeugs der Lebensmittelschneidevorrichtung erfassbares Signal bereitzustellen, wobei in Abhängigkeit von einer Erfassung des Signals eine Bewegung des Schneidwerkzeugs abbremsbar ist. Die Übermittlungseinheit ist vorzugsweise elektrisch und/oder mechanisch mit dem Bediener koppelbar. Bevorzugt umfasst die Übermittlungseinheit zumindest eine Übermittlungselektrode, die dazu vorgesehen ist, ein elektrisches Signal bereitzustellen, insbesondere den Bediener mit dem elektrischen Signal zu beaufschlagen. Vorzugsweise ist das elektrische Signal von der Sicherheitseinheit, insbesondere von der Erfassungseinheit, in dem Nahbereich des Schneidwerkzeugs erfassbar. Alternativ oder zusätzlich ist denkbar, dass die Übermittlungseinheit zumindest ein Sendeelement, beispielhaft einen Funksender oder einen Infrarotsender, aufweist, das dazu eingerichtet ist, ein elektromagnetisches Signal auszusenden. Vorzugsweise ist das Sendeelement an dem Bediener, insbesondere an dem Körperteil des Bedieners, anordenbar, beispielsweise in Form eines Armbands, eines Clips o. dgl. Insbesondere ist die Sicherheitseinheit, insbesondere die Erfassungseinheit der Sicherheitseinheit, dazu eingerichtet, das elektromagnetische Signal in dem Nahbereich des Schneidwerkzeugs zu erfassen. Vorteilhaft kann eine Erfassung eines Körperteils des Bedieners in dem Nahbereich des Schneidwerkzeugs zumindest im Wesentlichen unabhängig von körperlichen Eigenschaften des Bedieners ermöglicht werden.

Weiterhin geht die Erfindung aus von einer Lebensmittelschneidemaschine, insbesondere von einer Brotschneidemaschine, mit zumindest einer erfindungsgemäßen Lebensmittelschneidevorrichtung. Vorzugsweise umfasst die Lebensmittelschneidemaschine zusätzlich zu der Lebensmittelschneidevorrichtung weitere Bauteile, wie beispielsweise einen Auffangbehälter für abgetrennte Scheiben eines Lebensmittels. Vorteilhaft kann eine komfortabel und sicher nutzbare Lebensmittelschneidemaschine bereitgestellt werden.

Die erfindungsgemäße Lebensmittelschneidevorrichtung, das erfindungsgemäße Lebensmittelschneidesystem und/oder die erfindungsgemäße Lebensmittelschneidemaschine sollen/soll hierbei nicht auf die oben beschriebene Anwendung und Ausführungsform beschränkt sein. Insbesondere können/kann die erfindungsgemäße Lebensmittelschneidevorrichtung, das erfindungsgemäße Lebensmittelschneidesystem und/oder die erfindungsgemäße Lebensmittelschneidemaschine zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind 12 Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Lebensmittelschneidemaschine in einer perspektivischen Darstellung,
- Fig. 2: eine erfindungsgemäße Lebensmittelschneidevorrichtung der erfindungsgemäßen Lebensmittelschneidemaschine aus Fig. 1 in einer schematischen Darstellung,
- Fig. 3: eine Erfassungseinheit der erfindungsgemäßen Lebensmittelschneidevorrichtung aus Fig. 2 in einer schematischen Darstellung,
- Fig. 4: die Erfassungseinheit aus Fig. 3 in einer weiteren schematischen Darstellung,
- Fig. 5: eine erste alternative Erfassungseinheit in einer schematischen Darstellung,
- Fig. 6: eine Alternative der ersten alternativen Erfassungseinheit aus Fig. 5 in einer schematischen Darstellung,
- Fig. 7: eine zweite alternative Erfassungseinheit in einer schematischen Darstellung,
- Fig. 8: eine dritte alternative Erfassungseinheit in einer schematischen Darstellung,
- Fig. 9: eine vierte alternative Erfassungseinheit in einer schematischen Darstellung,
- Fig. 10: eine fünfte alternative Erfassungseinheit in einer perspektivischen Darstellung,
- Fig. 11: die fünfte alternative Erfassungseinheit aus Fig. 10 in einer schematischen Darstellung,
- Fig. 12: eine erste alternative Bremseinheit in einer schematischen Darstellung,
- Fig. 13: eine zweite alternative Bremseinheit in einer schematischen Darstellung,
- Fig. 14: eine dritte alternative Bremseinheit in einer schematischen Darstellung,
- Fig. 15: eine alternative Sicherheitseinheit mit einem Trennelement in einer schematischen Darstellung und
- Fig. 16: ein erfindungsgemäßes Lebensmittelschneidesystem in einer schematischen Darstellung.

### Beschreibung der Ausführungsbeispiele

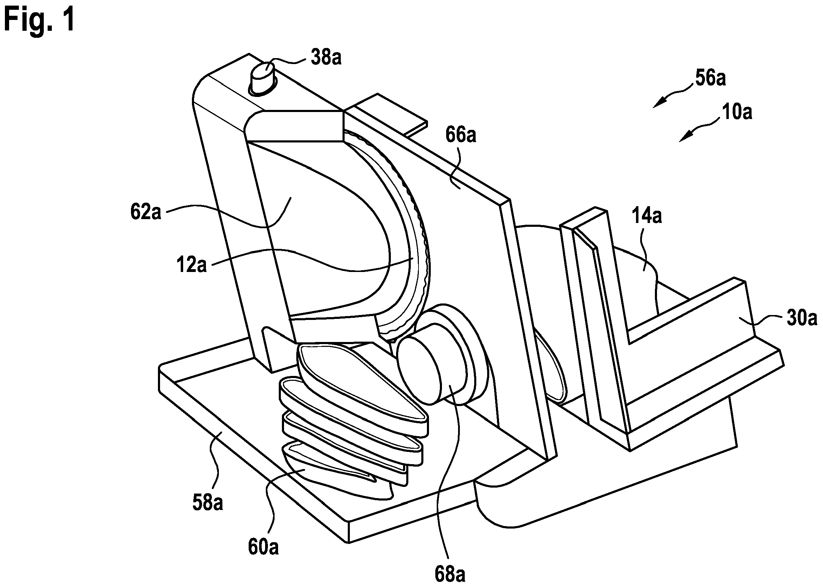

Figur 1 zeigt eine Lebensmittelschneidemaschine 56a in einer perspektivischen Darstellung. Die Lebensmittelschneidemaschine 56a ist als eine Brotschneidemaschine ausgebildet. Alternativ ist denkbar, dass die Lebensmittelschneidemaschine 56a als eine Aufschnittmaschine, als ein Kräuterhäcksler, als ein Mixer, als ein Fleischwolf o. dgl. ausgebildet ist. Die Lebensmittelschneidemaschine 56a umfasst eine Lebensmittelschneidevorrichtung 10a. Die Lebensmittelschneidemaschine 56a umfasst weitere Bauteile. Die Lebensmittelschneidemaschine 56a umfasst einen Auffangbehälter 58a für abgetrennte Scheiben 60a eines Lebensmittels 14a. Das Lebensmittel 14a ist als ein Brot ausgebildet. Die Lebensmittelschneidevorrichtung 10a ist als eine Brotschneidevorrichtung ausgebildet. Die Lebensmittelschneidevorrichtung 10a umfasst zumindest ein Schneidwerkzeug 12a zu einem Durchtrennen von Lebensmitteln 14a. Die Lebensmittelschneidevorrichtung 10a ist dazu vorgesehen, Lebensmittel 14a zu durchtrennen, insbesondere in Scheiben 60a zu schneiden. Die Lebensmittelschneidevorrichtung 10a ist dazu vorgesehen, Backwaren, insbesondere Brot, zu durchtrennen. Alternativ ist vorstellbar, dass die Lebensmittelschneidevorrichtung 10a dazu vorgesehen ist, Gemüse, Obst, Wurst, Schinken, Kräuter, Fleisch o. dgl. zu durchtrennen. Die Lebensmittelschneidevorrichtung 10a ist verschieden von einer Werkzeugmaschine, insbesondere von einer Tischsäge, einer Gehrungssäge, einer Kreissäge, einer Bandsäge o. dgl., ausgebildet. Die Lebensmittelschneidevorrichtung 10a ist zu einem Einsatz in einem Umfeld, in dem Lebensmittel 14a verarbeitet werden, insbesondere in einer Küche, vorgesehen.

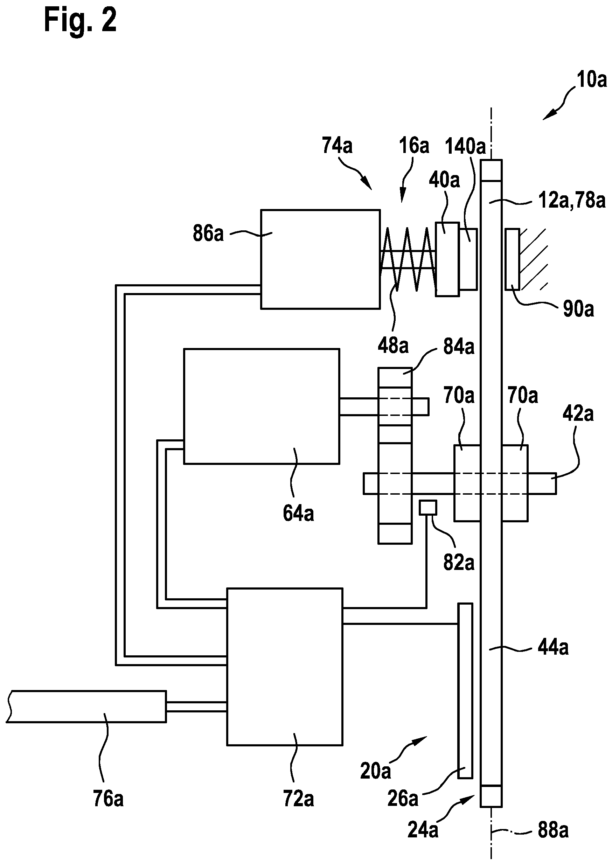

Ein Bediener 18a der Lebensmittelschneidevorrichtung 10a schiebt zu einer Bedienung der Lebensmittelschneidevorrichtung 10a das zu durchtrennende Lebensmittel 14a entlang des Schneidwerkzeugs 12a. Der Bediener 18a ist in Figur 1 nicht weiter dargestellt. Die Lebensmittelschneidevorrichtung 10a weist zumindest ein Lebensmittelförderelement 30a auf. Das Lebensmittelförderelement 30a ist als ein Schlitten ausgebildet. Das Lebensmittel 14a liegt auf dem Lebensmittelförderelement 30a auf. Der Bediener 18a kann mittels des Lebensmittelförderelements 30a das Lebensmittel 14a bewegen. Alternativ ist denkbar, dass die Lebensmittelschneidevorrichtung 10a ein automatisches Lebensmittelförderelement, beispielsweise einen motorisierten Schlitten o. dgl., aufweist. Die Lebensmittelschneidevorrichtung 10a weist ein Gehäuse 62a auf. Innerhalb des Gehäuses 62a sind verschiedene Komponenten der Lebensmittelschneidevorrichtung 10a angeordnet, beispielsweise eine Antriebseinheit 64a der Lebensmittelschneidevorrichtung 10a (vgl. Figur 2). Die Lebensmittelschneidevorrichtung 10a weist eine Schnitttiefeneinstellungseinheit 66a auf. Die Schnitttiefeneinstellungseinheit 66a ist zu einer Einstellung einer Stärke abzutrennender Scheiben 60a des zu durchtrennenden Lebensmittels 14a vorgesehen. Das Lebensmittel 14a liegt an einer Anlagefläche der Schnitttiefeneinstellungseinheit 66a an. Die Schnitttiefeneinstellungseinheit 66a weist ein Bedienelement 68a zu einer Einstellung einer Schnittstärke auf. Das Bedienelement 68a ist als ein Drehknopf ausgebildet.

Figur 2 zeigt die Lebensmittelschneidevorrichtung 10a der Lebensmittelschneidemaschine 56a aus Fig. 1 in einer schematischen Darstellung. Die Lebensmittelschneidevorrichtung 10a umfasst zumindest eine Sicherheitseinheit 16a zu einem Schutz des Bedieners 18a vor Verletzungen durch das Schneidwerkzeug 12a. Die Sicherheitseinheit 16a umfasst zumindest eine Erfassungseinheit 20a zu einer elektrischen, insbesondere kapazitiven, und/oder optosensorischen, insbesondere kamerafremden, Erfassung zumindest eines Körperteils 22a des Bedieners 18a in einem Nahbereich 24a des Schneidwerkzeugs 12a. In Abhängigkeit von der Erfassung ist eine Bewegung des Schneidwerkzeugs 12a abbremsbar. Das Schneidwerkzeug 12a ist als ein scheibenförmiges Schneidblatt ausgebildet. In Figur 2 ist eine Draufsicht auf eine Schneidkante 44a des Schneidwerkzeugs 12a dargestellt. Alternativ ist denkbar, dass das Schneidwerkzeug 12a als ein Rotationsmesser, als ein Walzenmesser o. dgl. ausgebildet ist. Das Schneidwerkzeug 12a ist zumindest teilweise aus einem Metall ausgebildet. Das Schneidwerkzeug 12a ist lösbar an einer Antriebswelle 42a der Lebensmittelschneidevorrichtung 10a angeordnet. Die Lebensmittelschneidevorrichtung 10a weist zwei Befestigungselemente 70a auf, die das Schneidwerkzeug 12a lösbar an der Antriebswelle 42a fixieren. Die Lebensmittelschneidevorrichtung 10a umfasst zumindest eine Antriebseinheit 64a, die dazu vorgesehen ist, die Antriebswelle 42a zu einer Realisierung einer Bewegung, insbesondere einer Rotation, des Schneidwerkzeugs 12a anzutreiben. Die Antriebseinheit 64a ist zumindest teilweise als ein Motor, insbesondere als ein Elektromotor, ausgebildet. Alternativ ist denkbar, dass die Antriebseinheit 64a zumindest einen Motor, insbesondere einen Elektromotor, umfasst. Die Antriebseinheit 64a ist zu einem Abbremsen einer Bewegung des Schneidwerkzeugs 12a abschaltbar und/oder aktiv abbremsbar, beispielsweise mittels einer Kurzschlussbremsung, mittels einer Gegenstrombremsung o. dgl. Die Antriebseinheit 64a ist zu einem Abbremsen einer Bewegung des Schneidwerkzeugs 12a zusätzlich zu einem mechanischen Abbremsen des Schneidwerkzeugs 12a abschaltbar und/oder aktiv abbremsbar.

Der Bediener 18a kann bei einer Bedienung der Lebensmittelschneidevorrichtung 10a mit zumindest einem Körperteil 22a, insbesondere unbeabsichtigt und/oder unbemerkt, in den Nahbereich 24a des Schneidwerkzeugs 12a gelangen. Der Nahbereich 24a des Schneidwerkzeugs 12a ist insbesondere als ein Bereich in einem Abstand von höchstens 1 cm von dem Schneidwerkzeug 12a, insbesondere von der Schneidkante 44a des Schneidwerkzeugs 12a, bevorzugt in einem Abstand von höchstens 0,5 cm von dem Schneidwerkzeug 12a, insbesondere von der Schneidkante 44a des Schneidwerkzeugs 12a, besonders bevorzugt von höchstens 0,1 cm von dem Schneidwerkzeug 12a, insbesondere von einer Schneidkante 44a des Schneidwerkzeugs 12a, und ganz besonders bevorzugt ein mit dem Schneidwerkzeug 12a, insbesondere mit der Schneidkante 44a des Schneidwerkzeugs 12a, in Kontakt stehender Bereich ausgebildet. Der Bediener 18a kann bei einer Bedienung der Lebensmittelschneidevorrichtung 10a mit einer Hand, insbesondere mit einem Finger der Hand, in den Nahbereich 24a des Schneidwerkzeugs 12a gelangen.

Die Sicherheitseinheit 16a ist dazu eingerichtet, ernsthafte Verletzungen des Bedieners 18a, insbesondere des Körperteils 22a des Bedieners 18a in dem Nahbereich 24a des Schneidwerkzeugs 12a, zu verhindern. Eine ernsthafte Verletzung kann als eine Abtrennung eines Körperteils 22a des Bedieners 18a, beispielhaft eines Fingers des Bedieners 18a, als ein Schnitt tiefer als maximal 4 mm in ein Körperteil 22a des Bedieners 18a, als eine Beschädigung einer Nervenbahn eines Körperteils 22a des Bedieners 18a o. dgl. ausgebildet sein. Die Erfassungseinheit 20a ist dazu eingerichtet, in Abhängigkeit von einer Erfassung eines Körperteils 22a in dem Nahbereich 24a des Schneidwerkzeugs 12a zumindest ein elektronisches Erfassungssignal bereitzustellen. Die Sicherheitseinheit 16a umfasst eine Elektronikeinheit 72a, die zu einer Auswertung des Erfassungssignals der Erfassungseinheit 20a eingerichtet ist. Die Elektronikeinheit 72a weist zumindest einen nicht weiter dargestellten Mikroprozessor auf. Die Elektronikeinheit 72a ist dazu eingerichtet, in Abhängigkeit von einer Auswertung des Erfassungssignals der Erfassungseinheit 20a zumindest eine Bremseinheit 74a der Sicherheitseinheit 16a anzusteuern. Die Elektronikeinheit 72a ist elektrisch mit der Erfassungseinheit 20a, mit der Antriebseinheit 64a, mit der Bremseinheit 74a und mit einer Energieversorgung 76a der Lebensmittelschneidevorrichtung 10a verbunden. Die Bremseinheit 74a ist dazu vorgesehen, eine Bewegung des Schneidwerkzeugs 12a abzubremsen. Die Bremseinheit 74a ist dazu vorgesehen, eine Bewegung des Schneidwerkzeugs 12a bis zu einem Stillstand des Schneidwerkzeugs 12a abzubremsen. Die Bremseinheit 74a ist zu einem Abbremsen des Schneidwerkzeugs 12a vorgesehen, das über eine reine Motorbremsung hinausgeht. Die Bremseinheit 74a ist zu einem mechanischen Abbremsen, insbesondere mittels eines Form- und/oder Reibschlusses, einer Bewegung des Schneidwerkzeugs 12a vorgesehen. Die Bremseinheit 74a ist insbesondere zu einem Abbremsen einer Bewegung des Schneidwerkzeugs 12a bis zu einem Stillstand des Schneidwerkzeugs 12a innerhalb von höchstens 500 ms, bevorzugt innerhalb von höchstens 200 ms, besonders bevorzugt innerhalb von höchstens 150 ms und ganz besonders bevorzugt innerhalb von höchstens 30 ms vorgesehen. Die Bremseinheit 74a weist zumindest ein Bremselement 40a auf, das dazu vorgesehen ist, das Schneidwerkzeug 12a zu einem Abbremsen einer Bewegung des Schneidwerkzeugs 12a zu blockieren. Das Bremselement 40a ist als eine Bremsbacke ausgebildet. Das Bremselement 40a weist einen Bremsbelag 140a auf. Alternativ ist denkbar, dass das Bremselement 40a als ein Bremsbolzen, als eine Schlingfeder o. dgl. ausgebildet ist. Alternativ oder zusätzlich zu der Bremseinheit 74a kann die Sicherheitseinheit 16a dazu vorgesehen sein, in Abhängigkeit von einer Erfassung eines Körperteils 22a des Bedieners 18a in dem Nahbereich 24a des Schneidwerkzeugs 12a das Schneidwerkzeug 12a von dem Körperteil 22a zu beabstanden, insbesondere wegzuschwenken, das Körperteil 22a des Bedieners 18a von dem Schneidwerkzeug 12a zu beabstanden o. dgl.

Die in Figur 2 dargestellte Erfassungseinheit 20a ist zu einer elektrischen Erfassung des Körperteils 22a des Bedieners 18a in dem Nahbereich 24a des Schneidwerkzeugs 12a eingerichtet. Die Erfassungseinheit 20a ist zu einer Erfassung einer Änderung einer elektrischen Kenngröße eingerichtet. Die Erfassungseinheit 20a ist zu einer Erfassung einer Änderung einer elektrischen Kapazität an dem Schneidwerkzeug 12a eingerichtet. Alternativ oder zusätzlich ist denkbar, dass die Erfassungseinheit 20a zu einer Erfassung einer Änderung einer elektrischen Spannung, eines elektrischen Stroms, einer elektrischen Induktion, einer Magnetresonanz o. dgl., insbesondere an dem Schneidwerkzeug 12a, eingerichtet ist. Ein Wert einer elektrischen Kenngröße in dem Nahbereich 24a des Schneidwerkzeugs 12a kann sich durch eine Annäherung an das Schneidwerkzeug 12a und/oder durch eine Berührung des Schneidwerkzeugs 12a durch ein Körperteil 22a des Bedieners 18a verändern. Die Erfassungseinheit 20a ist zu einer Erfassung des Körperteils 22a des Bedieners 18a in dem Nahbereich 24a des Schneidwerkzeugs 12a in Abhängigkeit von einer Änderung eines Werts zumindest einer elektrischen Kenngröße in dem Nahbereich 24a des Schneidwerkzeugs 12a eingerichtet. Die Elektronikeinheit 72a ist dazu eingerichtet, die Änderung des Werts der elektrischen Kenngröße auszuwerten und in Abhängigkeit von der Auswertung die Bremseinheit 74a anzusteuern. In einer Speichereinheit der Elektronikeinheit 72a sind Schwellwerte und/oder Schwellwertbereiche hinterlegt. Bei einer Überschreitung eines Schwellwerts und/oder eines Schwellwertbereichs durch einen Wert zumindest einer elektrischen Kenngröße ist die Elektronikeinheit 72a dazu eingerichtet, die Bremseinheit 74a anzusteuern. Die Erfassungseinheit 20a umfasst zu einer elektrischen Erfassung des Körperteils 22a des Bedieners 18a in dem Nahbereich 24a des Schneidwerkzeugs 12a eine in dem Nahbereich 24a des Schneidwerkzeugs 12a angeordnete Erfassungselektrode 78a. Im vorliegenden Ausführungsbeispiel ist das Schneidwerkzeug 12a selbst als die Erfassungselektrode 78a der Erfassungseinheit 20a ausgebildet.

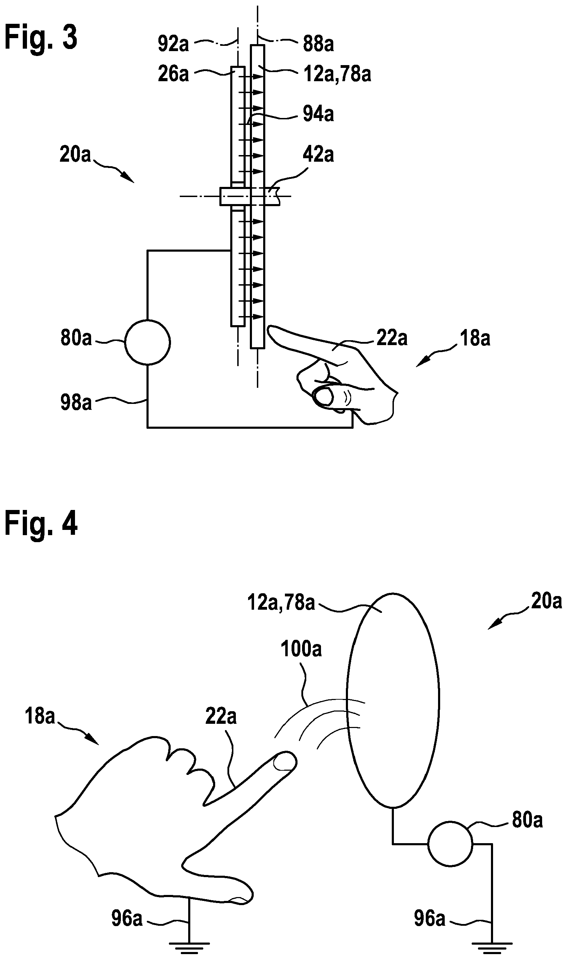

Die Erfassungseinheit 20a ist als eine, insbesondere mit dem Schneidwerkzeug 12a gekoppelte, kapazitive Erfassungseinheit ausgebildet. Die Erfassungseinheit 20a ist elektrisch mit dem Schneidwerkzeug 12a gekoppelt. Das Schneidwerkzeug 12a bildet zumindest einen Teil der Erfassungseinheit 20a aus. Das Schneidwerkzeug 12a dient als eine Erfassungselektrode 78a der Erfassungseinheit 20a. Das als eine Erfassungselektrode 78a ausgebildete Schneidwerkzeug 12a ist elektrisch isoliert von der Antriebswelle 42a an der Antriebswelle 42a angeordnet. Alternativ ist denkbar, dass die Erfassungseinheit 20a eine in dem Nahbereich 24a des Schneidwerkzeugs 12a angeordnete separat von dem Schneidwerkzeug 12a ausgebildete Erfassungselektrode, beispielhaft eine Antenne, aufweist. Die Erfassungseinheit 20a umfasst zumindest ein Kopplungselement 26a, das dazu vorgesehen ist, das Schneidwerkzeug 12a mit einem elektrischen Signal zu beaufschlagen, insbesondere elektrisch zu laden. Das Kopplungselement 26a ist dazu vorgesehen, das Schneidwerkzeug 12a mit einem Wechselsignal zu beaufschlagen. Das Kopplungselement 26a ist als ein indirektes Kopplungselement ausgebildet. Das Kopplungselement 26a ist als eine Koppelplatte ausgebildet. Alternativ ist vorstellbar, dass das Kopplungselement 26a als ein direktes Kopplungselement ausgebildet ist. Ein direktes Kopplungselement kann als ein Schleifkontakt, als ein Schleifring, als ein leitfähiges Kugellager oder als ein anderes, einem Fachmann als sinnvoll erscheinendes direktes Kopplungselement ausgebildet sein. Die Erfassungseinheit 20a funktioniert nach einem Prinzip eines kapazitiven Sensors. Das in dem Nahbereich 24a des Schneidwerkzeugs 12a angeordnete Körperteil 22a des Bedieners 18a zieht zumindest einen Teil einer elektrischen Ladung des Schneidwerkzeugs 12a von dem Schneidwerkzeug 12a (vgl. Figur 4). Ein Ladungsverlust des Schneidwerkzeugs 12a ist desto höher, je kleiner ein Abstand zwischen dem Körperteil 22a und dem Schneidwerkzeug 12a ist. Die Erfassungseinheit 20a weist zumindest eine Messeinheit 80a auf, die zu einer Messung einer Ladungsänderung des Schneidwerkzeugs 12a eingerichtet ist (hier der Übersichtlichkeit halber nicht weiter dargestellt, vgl. Figur 3). Die Elektronikeinheit 72a ist dazu eingerichtet, die von der Messeinheit 80a gemessene Ladungsänderung des Schneidwerkzeugs 12a zu einer Ansteuerung der Bremseinheit 74a auszuwerten. Alternativ ist denkbar, dass die Messeinheit 80a selbst dazu eingerichtet ist, die Ladungsänderung des Schneidwerkzeugs 12a auszuwerten.

Die Sicherheitseinheit 16a weist zumindest ein Wahlelement 38a zu einer Einstellung eines Betriebsverhaltens der Erfassungseinheit 20a in Abhängigkeit von einem zu durchtrennenden Lebensmittel 14a auf (vgl. Figur 1). Das Wahlelement 38a ist als ein Schalter ausgebildet. Das Wahlelement 38a ist als ein Drehschalter ausgebildet. Alternativ ist denkbar, dass das Wahlelement 38a als ein Schiebeschalter, als ein berührungssensitiver Schalter o. dgl., ausgebildet ist. Das Wahlelement 38a ist dazu eingerichtet, die Erfassungseinheit 20a unabhängig von weiteren Komponenten der Lebensmittelschneidevorrichtung 10a zu deaktivieren. Das Wahlelement 38a ist zu einer Anpassung einer Sensitivität der Erfassungseinheit 20a passend zu dem zu durchtrennenden Lebensmittel 14a eingerichtet. Das Wahlelement 38a ist zu einer Anpassung von Schwellwerten und/oder Schwellwertbereichen der Erfassung passend zu dem zu durchtrennenden Lebensmittel 14a eingerichtet. Das Wahlelement 38a ist zu einer Einstellung des Betriebsverhaltens der Erfassungseinheit 20a in Abhängigkeit von einer Ähnlichkeit des zu durchtrennenden Lebensmittels 14a mit dem Körperteil 22a des Bedieners 18a eingerichtet. Unterschiedliche zu durchtrennende Lebensmittel 14a und das Körperteil 22a des Bedieners 18a weisen unterschiedliche Eigenschaften auf, die sich auf eine Erfassung auswirken. Eine Eigenschaft eines zu durchtrennenden Lebensmittels 14a und/oder des Körperteils 22a des Bedieners 18a kann als eine elektrische Leitfähigkeit, als eine Strahlungsabsorptivität, als eine Strahlungsreflektivität, als ein Feuchtigkeitsgehalt oder als eine andere, einem Fachmann als sinnvoll erscheinende Eigenschaft ausgebildet sein. Es ist denkbar, dass beispielsweise eine zu durchtrennende Wurst unterschiedliche Eigenschaften, insbesondere zu Eigenschaften des Körperteils 22a des Bedieners 18a ähnlichere Eigenschaften, aufweist als ein zu durchtrennendes Brot. Das Wahlelement 38a ist an dem Gehäuse 62a der Lebensmittelschneidevorrichtung 10a angeordnet.

Die Erfassungseinheit 20a ist dazu eingerichtet, in Abhängigkeit von einer Bewegung des Schneidwerkzeugs 12a, insbesondere unabhängig von einem Antrieb des Schneidwerkzeugs 12a, das Körperteil 22a des Bedieners 18a in einem Nahbereich 24a des Schneidwerkzeugs 12a zu erfassen. Die Erfassungseinheit 20a ist während einer Bewegung des Schneidwerkzeugs 12a dauerhaft aktiviert und zu einer Erfassung des Körperteils 22a des Bedieners 18a in dem Nahbereich 24a des Schneidwerkzeugs 12a eingerichtet. Die Erfassungseinheit 20a ist während einer passiven Bewegung des Schneidwerkzeugs 12a aktiviert und zu einer Erfassung des Körperteils 22a des Bedieners 18a in dem Nahbereich 24a des Schneidwerkzeugs 12a eingerichtet. Die Sicherheitseinheit 16a umfasst zumindest ein Bewegungssensorelement 82a zu einer Erfassung einer Bewegung des Schneidwerkzeugs 12a. Die Erfassungseinheit 20a ist in Abhängigkeit von einem Signal des Bewegungssensorelements 82a aktivierbar und/oder deaktivierbar. Das Bewegungssensorelement 82a ist als ein elektromagnetisches Bewegungssensorelement ausgebildet. Das Bewegungssensorelement 82a ist als ein Hall-Sensor ausgebildet. Alternativ ist vorstellbar, dass das Bewegungssensorelement 82a als ein optisches Bewegungssensorelement o. dgl. ausgebildet ist. Das Bewegungssensorelement 82a ist elektrisch mit der Elektronikeinheit 72a verbunden. Das Bewegungssensorelement 82a ist zu einer Erfassung einer Bewegung, insbesondere einer Rotation, der Antriebswelle 42a eingerichtet. Das Bewegungssensorelement 82a ist zu einer mittelbaren Erfassung einer Bewegung des Schneidwerkzeugs 12a in Abhängigkeit von einer Erfassung einer Bewegung der Antriebswelle 42a eingerichtet. Die Lebensmittelschneidevorrichtung 10a umfasst ein Getriebe 84a. Die Antriebseinheit 64a ist über das Getriebe 84a zu einem Antrieb der Antriebswelle 42a vorgesehen.

Die Sicherheitseinheit 16a weist zumindest ein Bremselement 40a auf, das zu einem Abbremsen einer Bewegung des Schneidwerkzeugs 12a mittels eines Formschlusses und/oder eines Reibschlusses vorgesehen ist. Die Bremseinheit 74a der Sicherheitseinheit 16a weist das Bremselement 40a auf. Das Bremselement 40a ist zu einem Abbremsen einer Bewegung des Schneidwerkzeugs 12a mittels eines Formschlusses und/oder eines Reibschlusses mit dem Schneidwerkzeug 12a vorgesehen. Alternativ oder zusätzlich ist vorstellbar, dass das Bremselement 40a zu einem Abbremsen einer Bewegung des Schneidwerkzeugs 12a mittels eines Formschlusses und/oder eines Reibschlusses mit der Antriebswelle 42a vorgesehen ist. Das Bremselement 40a ist insbesondere dazu vorgesehen, das Schneidwerkzeug 12a mittels eines Formschlusses und/oder eines Reibschlusses derart abzubremsen, dass sich das, insbesondere rotierende, Schneidwerkzeug 12a nach einer Erfassung des Körperteils 22a des Bedieners 18a in dem Nahbereich 24a des Schneidwerkzeugs 12a um maximal 120°, bevorzugt um maximal 50° und besonders bevorzugt um maximal 30° weiterbewegt bevor das Schneidwerkzeug 12a zum Stillstand kommt, insbesondere unter Nichtberücksichtigung von Fertigungstoleranzen. Das Bremselement 40a weist insbesondere einen Reibungskoeffizienten von zumindest 0,3, bevorzugt von zumindest 0,4 und besonders bevorzugt von zumindest 0,5 auf.

Die Sicherheitseinheit 16a weist zumindest eine Energiespeichereinheit 48a auf, die zu einer Kraftbeaufschlagung zumindest eines Bremselements 40a der Sicherheitseinheit 16a, insbesondere zu einer Realisierung eines Eingriffs mit dem Schneidwerkzeug 12a innerhalb von höchstens 7 Millisekunden nach einem Signalempfang von der Erfassungseinheit 20a, vorgesehen ist. Die Energiespeichereinheit 48a ist zu einer Speicherung von mechanischer Energie vorgesehen. Die Energiespeichereinheit 48a ist dazu vorgesehen, das Bremselement 40a vorzuspannen. Die Energiespeichereinheit 48a ist als eine Druckfeder ausgebildet, die das Bremselement 40a zu einer Bewegung in Richtung des Schneidwerkzeugs 12a vorspannt. Alternativ oder zusätzlich ist denkbar, dass die Energiespeichereinheit 48a das Bremselement 40a zu einer Bewegung in Richtung der Antriebswelle 42a vorspannt. Die Bremseinheit 74a weist zumindest ein Rückhalteelement 86a auf, das dazu vorgesehen ist, das Bremselement 40a gegen die Kraft der Energiespeichereinheit 48a zurückzuhalten. Das Rückhalteelement 86a ist als ein Aktor ausgebildet. Das Rückhalteelement 86a ist als ein Stellmotor ausgebildet. Alternativ ist vorstellbar, dass das Rückhalteelement 86a als eine Schmelzsicherung, als ein von einem Stellmotor verschieden ausgebildeter Aktor, wie beispielsweise als ein Hubmagnet, als ein Piezokristall, als ein Formgedächtnismetall, o. dgl. ausgebildet ist. In Abhängigkeit von einem Signalempfang von der Erfassungseinheit 20a kann das Rückhalteelement 86a gelöst werden. Im vorliegenden Ausführungsbeispiel ist eine Bestromung des Rückhalteelements 86a unterbrechbar. Alternativ ist beispielsweise vorstellbar, dass eine Schmelzsicherung schmelzbar ist o. dgl. Ohne eine Rückhaltung kann die Energiespeichereinheit 48a die gespeicherte Energie in Form einer Kraftbeaufschlagung des Bremselements 40a freisetzen und das Bremselement 40a gegen das Schneidwerkzeug 12a bewegen. Insbesondere ist die Energiespeichereinheit 48a dazu vorgesehen, das Bremselement 40a innerhalb von höchstens 7 ms nach einem Signalempfang von der Erfassungseinheit 20a, bevorzugt innerhalb von höchstens 5 ms nach einem Signalempfang von der Erfassungseinheit 20a und besonders bevorzugt innerhalb von höchstens 3 ms nach einem Signalempfang von der Erfassungseinheit 20a mit dem Schneidwerkzeug 12a in Eingriff zu bringen.

Das Schneidwerkzeug 12a ist derart steif ausgebildet, dass das Schneidwerkzeug 12a einem Kontakt mit dem Bremselement 40a, insbesondere in einer Richtung zumindest im Wesentlichen senkrecht zu einer Haupterstreckungsebene 88a des Schneidwerkzeugs 12a, zumindest im Wesentlichen verformungsfrei standhält. Die Bremseinheit 74a weist ein Gegenhalterelement 90a auf, das auf einer dem Bremselement 40a abgewandten Seite des Schneidwerkzeugs 12a angeordnet ist. Das Gegenhalterelement 90a ist dazu vorgesehen, das Schneidwerkzeug 12a gegen eine Kraft des Bremselements 40a abzustützen. Das Gegenhalterelement 90a ist im vorliegenden Ausführungsbeispiel zusätzlich zu einer steifen Ausbildung des Schneidwerkzeugs 12a vorgesehen. In einer alternativen Ausführungsform ist denkbar, dass das Gegenhalterelement 90a alternativ zu einer steifen Ausbildung des Schneidwerkzeugs 12a vorsehbar ist, dass die Bremseinheit 74a als eine Zangenbremse ausgebildet ist, die zumindest zwei Bremselemente 40a aufweist, die auf voneinander abgewandten Seiten des Schneidwerkzeugs 12a angeordnet sind, o. dgl. Das Rückhalteelement 86a dient auch als ein Rückstellelement, das dazu vorgesehen ist, einen Formschluss und/oder Reibschluss nach einem Abbremsen des Schneidwerkzeugs 12a zu lösen.

Die Sicherheitseinheit 16a weist zumindest ein Bremselement 40a auf, das zu einem Abbremsen einer Bewegung des Schneidwerkzeugs 12a bis zu einem Stillstand des Schneidwerkzeugs 12a innerhalb von höchstens 15 Millisekunden nach einem Eindringen zumindest eines Körperteils 22a des Bedieners 18a in den Nahbereich 24a des Schneidwerkzeugs 12a vorgesehen ist. Das Bremselement 40a ist zu einem Abbremsen des Schneidwerkzeugs 12a innerhalb von höchstens 15 ms nach einem Eindringen des Körperteils 22a des Bedieners 18a in den Nahbereich 24a des Schneidwerkzeugs 12a mittels eines Reibschlusses und/oder eines Formschlusses vorgesehen. Die Erfassungseinheit 20a ist dazu eingerichtet, das Körperteil 22a des Bedieners 18a in dem Nahbereich 24a des Schneidwerkzeugs 12a innerhalb von höchstens 3 ms nach einem Eindringen des Körperteils 22a in den Nahbereich 24a des Schneidwerkzeugs 12a zu erfassen. Die Energiespeichereinheit 48a ist dazu vorgesehen, das Bremselement 40a innerhalb von höchstens 3 ms nach einer Erfassung des Körperteils 22a in dem Nahbereich 24a des Schneidwerkzeugs 12a mit dem Schneidwerkzeug 12a in Kontakt zu bringen. Alternativ ist vorstellbar, dass die Energiespeichereinheit 48a dazu vorgesehen ist, das Bremselement 40a innerhalb von höchstens 3 ms nach einer Erfassung des Körperteils 22a in dem Nahbereich 24a des Schneidwerkzeugs 12a mit der Antriebswelle 42a in Kontakt zu bringen. Das Bremselement 40a ist dazu vorgesehen, eine Bewegung des Schneidwerkzeugs 12a innerhalb von höchstens 9 ms nach einem ersten Kontakt mit dem Schneidwerkzeug 12a bis zu einem Stillstand des Schneidwerkzeugs 12a abzubremsen.

Die Sicherheitseinheit 16a ist in Abhängigkeit von einem erfassten Abstand eines Körperteils 22a des Bedieners 18a von dem Schneidwerkzeug 12a zu einer Einleitung von unterschiedlichen, insbesondere kaskadierten, Bremsmaßnahmen eingerichtet. Die Elektronikeinheit 72a der Sicherheitseinheit 16a ist in Abhängigkeit von einem erfassten Abstand des Körperteils 22a des Bedieners 18a von dem Schneidwerkzeug 12a zu einer Einleitung von unterschiedlichen, insbesondere kaskadierten, Bremsmaßnahmen eingerichtet. Die Erfassungseinheit 20a ist dazu eingerichtet, einen Abstand des Körperteils 22a des Bedieners 18a von dem Schneidwerkzeug 12a zu erfassen und/oder die Elektronikeinheit 72a ist dazu eingerichtet, in Abhängigkeit von einem Signal der Erfassungseinheit 20a einen Abstand des Körperteils 22a von dem Schneidwerkzeug 12a zu ermitteln. Im vorliegenden Ausführungsbeispiel ist ein einzelnes Sensorelement der Erfassungseinheit 20a, insbesondere die Erfassungselektrode 78a, dazu eingerichtet, unterschiedliche Abstände des Körperteils 22a von dem Schneidwerkzeug 12a zu ermitteln. Alternativ oder zusätzlich ist denkbar, dass die Erfassungseinheit 20a eine Mehrzahl von in unterschiedlichen Abständen zu dem Schneidwerkzeug 12a angeordneten Sensorelementen aufweist oder dass die Erfassungseinheit 20a unterschiedliche Sensorelemente zu einer Erfassung von unterschiedlichen Abständen des Körperteils 22a von dem Schneidwerkzeug 12a aufweist. Beispielsweise ist denkbar, dass die Erfassungseinheit 20a ein Infrarot-Sensorelement zu einer Erfassung einer Annäherung des Körperteils 22a an das Schneidwerkzeug 12a und ein kapazitives Sensorelement zu einer Erfassung eines Kontakts des Körperteils 22a mit dem Schneidwerkzeug 12a aufweist.

Die Sicherheitseinheit 16a, insbesondere die Elektronikeinheit 72a, ist dazu eingerichtet, je geringer der erfasste Abstand zwischen dem Körperteil 22a und dem Schneidwerkzeug 12a ist, desto schneller zu einem Abbremsen einer Bewegung des Schneidwerkzeugs 12a führende Bremsmaßnahmen einzuleiten. Beispielsweise kann die Sicherheitseinheit 16a, insbesondere die Elektronikeinheit 72a, in Abhängigkeit von einer Annäherung des Körperteils 22a an das Schneidwerkzeug 12a zu einer Einleitung einer Motorbremsung eingerichtet sein. Beispielsweise kann die Sicherheitseinheit 16a, insbesondere die Elektronikeinheit 72a, in Abhängigkeit von einem Kontakt des Körperteils 22a mit dem Schneidwerkzeug 12a zu einer Einleitung einer mechanischen Bremsung eingerichtet sein. Kaskadierte Bremsmaßnahmen sind insbesondere mehrere, insbesondere unterschiedliche, Bremsmaßnahmen, die aufeinanderfolgend eingeleitet werden. Beispielsweise kann die Sicherheitseinheit 16a, insbesondere die Elektronikeinheit 72a, dazu eingerichtet sein, bei einer Annäherung des Körperteils 22a an das Schneidwerkzeug 12a die Antriebseinheit 64a zu deaktivieren, bei einer weiteren Annäherung des Körperteils 22a an das Schneidwerkzeug 12a eine Motorbremsung einzuleiten und bei einem Kontakt des Körperteils 22a mit dem Schneidwerkzeug 12a eine mechanische Bremsung einzuleiten.

Figur 3 zeigt die Erfassungseinheit 20a der Lebensmittelschneidevorrichtung 10a aus Fig. 2 in einer schematischen Darstellung. Die Erfassungseinheit 20a weist zumindest ein Kopplungselement 26a auf, das dazu vorgesehen ist, das Schneidwerkzeug 12a kontaktlos elektrisch zu laden, wobei das Schneidwerkzeug 12a einen Teil der Erfassungseinheit 20a ausbildet. Das Kopplungselement 26a ist als eine halbscheibenförmige Koppelplatte ausgebildet. Alternativ ist vorstellbar, dass das Kopplungselement 26a als eine scheibenförmige Koppelplatte, als eine rechteckige, insbesondere quadratische, Koppelplatte o. dgl. ausgebildet ist. Das Kopplungselement 26a ist auf der Antriebswelle 42a beabstandet von dem Schneidwerkzeug 12a angeordnet. Eine Haupterstreckungsebene 92a des Kopplungselements 26a ist zumindest im Wesentlichen parallel zu der Haupterstreckungsebene 88a des Schneidwerkzeugs 12a angeordnet. Das Kopplungselement 26a ist dazu vorgesehen, das Schneidwerkzeug 12a kapazitiv mit einem elektrischen Signal zu beaufschlagen, insbesondere elektrisch aufzuladen. Eine kapazitive Kopplung zwischen dem Kopplungselement 26a und dem Schneidwerkzeug 12a ist in Figur 3 durch Pfeile 94a illustriert. Das Kopplungselement 26a ist elektrisch mit der Messeinheit 80a verbunden. Die Messeinheit 80a ist zumindest teilweise als ein Strommessgerät ausgebildet. Alternativ oder zusätzlich ist denkbar, dass die Messeinheit 80a zumindest teilweise als ein Spannungsmessgerät, als eine Messschaltung, insbesondere als eine anwendungsspezifische integrierte Schaltung, als ein Mikroprozessor o. dgl. ausgebildet ist. Die Messeinheit 80a und der Bediener 18a, insbesondere das Körperteil 22a des Bedieners 18a, sind mit einer elektrischen Erdmasse 96a verbunden (vgl. Figur 4). Eine kapazitive Kopplung zwischen dem Körperteil 22a des Bedieners 18a und dem Schneidwerkzeug 12a und/oder ein Kontakt des Körperteils 22a des Bedieners 18a mit dem Schneidwerkzeug 12a schließt einen elektrischen Stromkreis, was in Figur 3 durch eine Verbindung 98a zwischen der Messeinheit 80a und dem Körperteil 22a des Bedieners 18a illustriert ist. Das Körperteil 22a des Bedieners 18a ist als eine Hand ausgebildet.

Figur 4 zeigt die Erfassungseinheit 20a aus Fig. 3 in einer weiteren schematischen Darstellung. Das Körperteil 22a des Bedieners 18a und das Kopplungselement 26a (hier durch das Schneidwerkzeug 12a verdeckt) sind mit der elektrischen Erdmasse 96a verbunden. Figur 4 zeigt eine Ladungsübertragung von dem Schneidwerkzeug 12a auf das Körperteil 22a des Bedieners 18a bei einer Annäherung des Körperteils 22a an das Schneidwerkzeug 12a. Die Ladungsübertragung ist durch Feldlinien 100a illustriert.

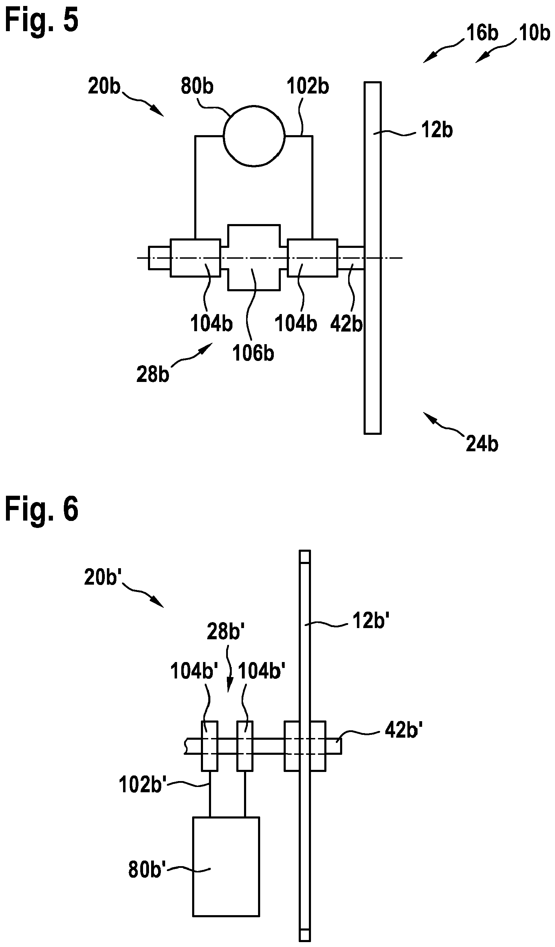

In den Figuren 5 bis 16 sind elf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 16 ist der Buchstabe a durch die Buchstaben b bis k ersetzt.

Figur 5 zeigt eine erste alternative Erfassungseinheit 20b in einer schematischen Darstellung. Eine Sicherheitseinheit 16b umfasst die Erfassungseinheit 20b. Die Erfassungseinheit 20b umfasst zumindest einen Kondensator 28b, der zu einer Erfassung zumindest eines Körperteils eines Bedieners in einem Nahbereich 24b eines Schneidwerkzeugs 12b verstimmbar ist. Der Kondensator 28b ist in dem Nahbereich 24b des Schneidwerkzeugs 12b angeordnet. Die Erfassungseinheit 20b umfasst zumindest einen elektrischen Schwingkreis 102b. Der Kondensator 28b bildet einen Teil des Schwingkreises 102b aus. Der elektrische Schwingkreis 102b weist zumindest einen Taktgenerator auf (hier nicht weiter dargestellt). Der Taktgenerator ist in eine Messeinheit 80b der Erfassungseinheit 20b integriert. Der Taktgenerator ist dazu eingerichtet, einen Takt eines elektrischen Signals in dem elektrischen Schwingkreis 102b vorzugeben. Der Takt des elektrischen Signals in dem elektrischen Schwingkreis 102b ist bei einer konstanten Vorgabe durch den Taktgenerator abhängig von einer Kapazität des Kondensators 28b. Die Kapazität des Kondensators 28b ist in Abhängigkeit von einem Körperteil des Bedieners in dem Nahbereich 24b des Schneidwerkzeugs 12b veränderbar. Eine Veränderung der Kapazität des Kondensators 28b entspricht einer Verstimmung des Kondensators 28b und des elektrischen Schwingkreises 102b. Die Messeinheit 80b ist dazu eingerichtet, eine Verstimmung des Kondensators 28b bzw. des elektrischen Schwingkreises 102b zu erfassen. Der Kondensator 28b weist zumindest zwei elektrisch leitfähige Hülsen 104b auf. Die Hülsen 104b sind voneinander beabstandet an einer Antriebswelle 42b angeordnet. Die Hülsen 104b sind elektrisch von der Antriebswelle 42b isoliert. Die Hülsen 104b sind durch eine Verstärkung 106b der Antriebswelle 42b voneinander getrennt. Das Schneidwerkzeug 12b ist elektrisch leitfähig mit der Antriebswelle 42b verbunden und dient als ein Dielektrikum des Kondensators 28b. Der Kondensator 28b ist zumindest teilweise durch die Hülsen 104b ausgebildet. Eine Dielektrizitätskonstante des Schneidwerkzeugs 12b ist abhängig von einem Abstand eines Körperteils des Bedieners von dem Schneidwerkzeug 12b. Die Kapazität des Kondensators 28b ist abhängig von der Dielektrizitätskonstante des Schneidwerkzeugs 12b. In Abhängigkeit von einer Annäherung eines Körperteils des Bedieners an das Schneidwerkzeug 12b ändert sich die Dielektrizitätskonstante des Schneidwerkzeugs 12b und die Kapazität des Kondensators 28b, die von der Messeinheit 80b erfassbar ist.

Figur 6 zeigt eine Alternative der ersten alternativen Erfassungseinheit 20b aus Fig. 5 in einer schematischen Darstellung. Die in Figur 6 dargestellte Erfassungseinheit 20b' ist zumindest im Wesentlichen analog zu der in Figur 5 dargestellten Erfassungseinheit 20b ausgebildet. Die Erfassungseinheit 20b' umfasst einen Kondensator 28b'. Der Kondensator 28b' weist zwei elektrisch leitfähige Hülsen 104b' auf, die voneinander beabstandet an einer Antriebswelle 42b' angeordnet sind. Die Antriebswelle 42b' ist frei von einer Verstärkung zwischen den Hülsen 104b' ausgebildet.

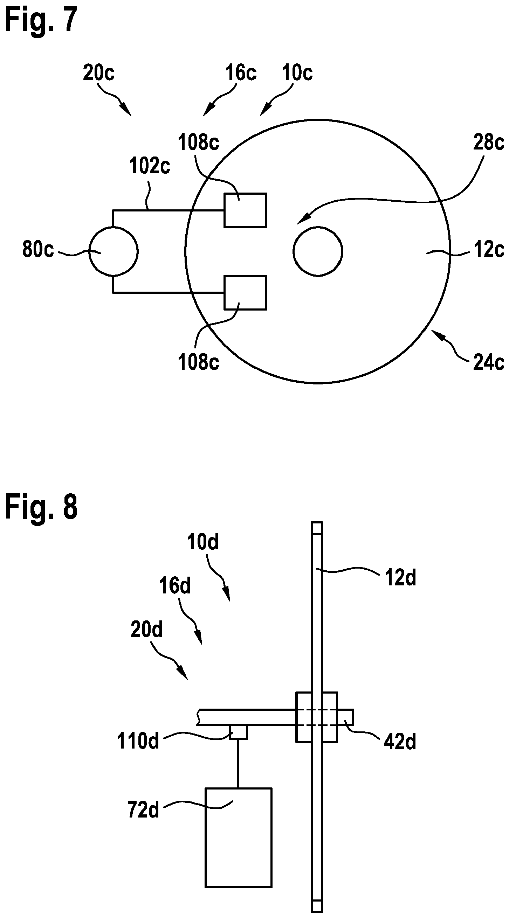

Figur 7 zeigt eine zweite alternative Erfassungseinheit 20c in einer schematischen Darstellung. Eine Sicherheitseinheit 16c umfasst die Erfassungseinheit 20c. Die Erfassungseinheit 20c funktioniert zumindest im Wesentlichen analog zu den in den Figuren 5 und 6 dargestellten Erfassungseinheiten 20b, 20b'. Die Erfassungseinheit 20c umfasst einen Kondensator 28c, der zu einer Erfassung eines Körperteils eines Bedieners in einem Nahbereich 24c eines Schneidwerkzeugs 12c verstimmbar ist. Der Kondensator 28c weist zumindest zwei voneinander beabstandet angeordnete elektrisch leitfähige Platten 108c auf. Die Platten 108c sind auf einer gleichen Seite des Schneidwerkzeugs 12c angeordnet. Alternativ ist denkbar, dass die Platten 108c jeweils auf voneinander abgewandten Seiten des Schneidwerkzeugs 12c angeordnet sind. Das Schneidwerkzeug 12c dient als ein Dielektrikum des Kondensators 28c.

Figur 8 zeigt eine dritte alternative Erfassungseinheit 20d in einer schematischen Darstellung. Eine Sicherheitseinheit 16d umfasst die Erfassungseinheit 20d. Die Erfassungseinheit 20d ist als eine kapazitive Erfassungseinheit ausgebildet. Die Erfassungseinheit 20d funktioniert zumindest im Wesentlichen analog zu der Erfassungseinheit 20a des ersten Ausführungsbeispiels. Eine Lebensmittelschneidevorrichtung 10d umfasst ein Schneidwerkzeug 12d und eine Antriebswelle 42d. Das Schneidwerkzeug 12d und die Antriebswelle 42d sind elektrisch leitfähig ausgebildet. Das Schneidwerkzeug 12d ist elektrisch leitend mit der Antriebswelle 42d verbunden. Eine Elektronikeinheit 72d der Sicherheitseinheit 16d ist dazu eingerichtet, das Schneidwerkzeug 12d über die Antriebswelle 42d elektrisch zu laden. Die Erfassungseinheit 20d umfasst einen Schleifkontakt 110d. Der Schleifkontakt 110d ist dazu vorgesehen, die Elektronikeinheit 72d elektrisch leitend mit der Antriebswelle 42d zu verbinden. Die Elektronikeinheit 72d ist dazu eingerichtet, das Schneidwerkzeug 12d über den Schleifkontakt 110d und die Antriebswelle 42d mit einem elektrischen Signal zu beaufschlagen.

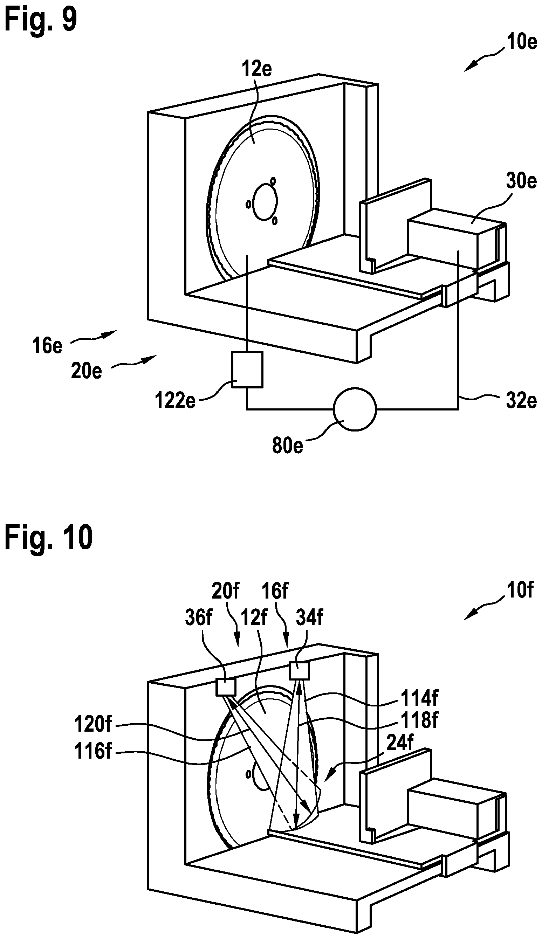

Figur 9 zeigt eine vierte alternative Erfassungseinheit 20e in einer schematischen Darstellung. Eine Sicherheitseinheit 16e umfasst die Erfassungseinheit 20e. Eine Lebensmittelschneidevorrichtung 10e umfasst zumindest ein Lebensmittelförderelement 30e, mit dem die Erfassungseinheit 20e zu einer Erfassung eines geschlossenen Stromkreises 32e zwischen einem Schneidwerkzeug 12e der Lebensmittelschneidevorrichtung 10e und einem Körperteil eines Bedieners der Lebensmittelschneidevorrichtung 10e elektrisch leitend verbunden ist. Das Lebensmittelförderelement 30e ist elektrisch leitfähig ausgebildet, beispielsweise zumindest teilweise aus einem Metall. Das Lebensmittelförderelement 30e ist als ein manuell bedienbares Lebensmittelförderelement ausgebildet. Das Lebensmittelförderelement 30e ist als ein Schlitten ausgebildet. Eine Messeinheit 80e der Erfassungseinheit 20e und eine elektrische Spannungsquelle 112e der Erfassungseinheit 20e sind elektrisch leitfähig mit dem Lebensmittelförderelement 30e und mit dem Schneidwerkzeug 12e verbunden. Die Messeinheit 80e ist unmittelbar elektrisch leitfähig mit dem Lebensmittelförderelement 30e und über die elektrische Spannungsquelle 112e elektrisch leitfähig mit dem Schneidwerkzeug 12e verbunden. Die elektrische Spannungsquelle 112e ist unmittelbar elektrisch leitfähig mit dem Schneidwerkzeug 12e und über die Messeinheit 80e mit dem Lebensmittelförderelement 30e elektrisch leitfähig verbunden. Der Bediener berührt während einer Bedienung der Lebensmittelschneidevorrichtung 10e das Lebensmittelförderelement 30e und ist elektrisch leitend mit dem Lebensmittelförderelement 30e verbunden. Der Bediener schließt durch eine Berührung des Schneidwerkzeugs 12e den Stromkreis 32e zwischen dem Schneidwerkzeug 12e, dem Lebensmittelförderelement 30e, der Messeinheit 80e und der elektrischen Spannungsquelle 112e. In Folge einer Berührung des Schneidwerkzeugs 12e durch den Bediener kann ein von der elektrischen Spannungsquelle 112e bereitgestellter elektrischer Strom durch den geschlossenen Stromkreis 32e fließen. Die Messeinheit 80e ist dazu eingerichtet, einen elektrischen Stromfluss zu erfassen.

Figur 10 zeigt eine fünfte alternative Erfassungseinheit 20f in einer perspektivischen Darstellung. Eine Sicherheitseinheit 16f umfasst die Erfassungseinheit 20f. Die Erfassungseinheit 20f ist zu einer optosensorischen Erfassung zumindest eines Körperteils 22f eines Bedieners 18f einer Lebensmittelschneidevorrichtung 10f in einem Nahbereich 24f eines Schneidwerkzeugs 12f der Lebensmittelschneidevorrichtung 10f eingerichtet. Die Erfassungseinheit 20f weist zumindest ein optisches Sensorelement auf. Die Erfassungseinheit 20f weist zwei optische Sensorelemente auf. Die optischen Sensorelemente sind verschieden von einer Kamera ausgebildet. Die optischen Sensorelemente sind zu einer Erfassung von Strahlung mit Wellenlängen von höchstens 1 mm eingerichtet. Die optischen Sensorelemente sind zu einer Erfassung von Infrarotstrahlung eingerichtet. Die optischen Sensorelemente sind als Infrarot-Sensorelemente 34f, 36f ausgebildet. Die Infrarot-Sensorelemente 34f, 36f sind als Infrarotsensoren ausgebildet. Alternativ oder zusätzlich ist denkbar, dass die optischen Sensorelemente zu einer Erfassung von Terahertzstrahlung, Röntgenstrahlung o. dgl. eingerichtet sind. Die optischen Sensorelemente könnten alternativ als Terahertzsensoren, als Lichtschranken, als Laserscanner, als Lidarsysteme oder als andere, einem Fachmann als sinnvoll erscheinende optische Sensorelemente ausgebildet sein.

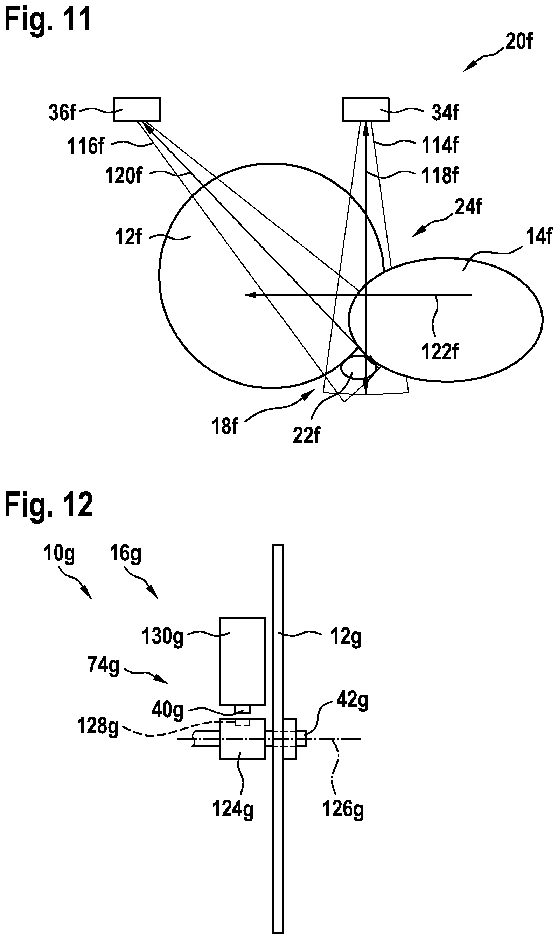

Die Erfassungseinheit 20f ist zu einer optosensorischen Erfassung zumindest eines Körperteils 22f des Bedieners 18f in einem Nahbereich 24f des Schneidwerkzeugs 12f als eine Infrarot-Erfassungseinheit, insbesondere als eine Nahinfrarot-Erfassungseinheit, ausgebildet. Die Erfassungseinheit 20f ist als eine Nahinfrarot-Erfassungseinheit ausgebildet. Alternativ oder zusätzlich ist denkbar, dass die Erfassungseinheit 20f als eine Mittelinfrarot-Erfassungseinheit oder als eine Ferninfrarot-Erfassungseinheit ausgebildet ist. Insbesondere ist die Erfassungseinheit 20f zu einer Ausstrahlung und zu einer Erfassung von Infrarotstrahlung in einem Wellenlängenbereich zwischen 0,78 µm und 1000 µm, bevorzugt in einem Wellenlängenbereich zwischen 0,78 µm und 50 µm, besonders bevorzugt in einem Wellenlängenbereich zwischen 0,78 µm und 3 µm und ganz besonders bevorzugt in einem Wellenlängenbereich zwischen 0,78 µm und 1,4 µm eingerichtet. Ein erstes Infrarot-Sensorelement 34f und ein zweites Infrarot-Sensorelement 36f der Erfassungseinheit 20f sind zu einer Ausstrahlung und zu einer Erfassung von Infrarotstrahlung eingerichtet. Alternativ ist vorstellbar, dass die Infrarot-Sensorelemente 34f, 36f lediglich zu einer Erfassung von Infrarotstrahlung eingerichtet sind und die Erfassungseinheit 20f zumindest eine separat von den Infrarot-Sensorelementen 34f, 36f ausgebildete Strahlungsquelle aufweist, die zu einer Ausstrahlung von Infrarotstrahlung eingerichtet ist. Die Infrarot-Sensorelemente 34f, 36f sind dazu eingerichtet, von dem Körperteil 22f des Bedieners 18f reflektierte Infrarotstrahlung zu erfassen. Die Erfassungseinheit 20f ist dazu eingerichtet, in Abhängigkeit von reflektierter Infrarotstrahlung das Körperteil 22f des Bedieners 18f von einem zu durchtrennenden Lebensmittel 14f zu unterscheiden (vgl. Figur 11). Das zu durchtrennende Lebensmittel 14f, insbesondere Brot, weist unterschiedliche Absorptionscharakteristika und/oder Reflektionscharakteristika als das Körperteil 22f des Bedieners 18f, insbesondere eine Haut des Körperteils 22f des Bedieners 18f, auf. Das erste Infrarot-Sensorelement 34f weist einen Erfassungsbereich 114f auf. Das zweite Infrarot-Sensorelement 36f weist einen Erfassungsbereich 116f auf. Der Erfassungsbereich 114f des ersten Infrarot-Sensorelements 34f und der Erfassungsbereich 116f des zweiten Infrarot-Sensorelements 36f sind jeweils zumindest im Wesentlichen kegelförmig ausgebildet. Die Erfassungsbereiche 114f, 116f sind in dem Nahbereich 24f des Schneidwerkzeugs 12f angeordnet. Die Infrarot-Sensorelemente 34f, 36f sind derart angeordnet, dass eine Haupterstreckungsrichtung 118f des Erfassungsbereichs 114f des ersten Infrarot-Sensorelements 34f und eine Haupterstreckungsrichtung 120f des Erfassungsbereichs 116f des zweiten Infrarot-Sensorelements 36f quer zu einer Vorschubrichtung 122f des zu durchtrennenden Lebensmittels 14f, insbesondere eines Lebensmittelförderelements 30f der Lebensmittelschneidevorrichtung 10f, verlaufen (vgl. Figur 11). Der Erfassungsbereich 114f des ersten Infrarot-Sensorelements 34f und der Erfassungsbereich 116f des zweiten Infrarot-Sensorelements 36f verlaufen quer zueinander. Insbesondere weisen die Erfassungsbereiche 114f, 116f der Infrarot-Sensorelemente 34f, 36f jeweils einen maximalen Durchmesser von höchstens 10 cm, bevorzugt von höchstens 5 cm und besonders bevorzugt von höchstens 2 cm auf.

Figur 11 zeigt die fünfte alternative Erfassungseinheit 20f aus Fig. 10 in einer schematischen Darstellung. Die Erfassungseinheit 20f umfasst zu einer zumindest im Wesentlichen vollständigen sensorischen Abdeckung des Nahbereichs 24f des Schneidwerkzeugs 12f zumindest zwei voneinander beabstandet angeordnete Infrarot-Sensorelemente 34f, 36f. Die Infrarot-Sensorelemente 34f, 36f sind entlang der Vorschubrichtung 122f des Lebensmittelförderelements 30f beabstandet voneinander angeordnet. Das erste Infrarot-Sensorelement 34f ist entlang der Vorschubrichtung 122f des Lebensmittelförderelements 30f betrachtet vor dem Schneidwerkzeug 12f angeordnet. Das zweite Infrarot-Sensorelement 36f ist entlang der Vorschubrichtung 122f des Lebensmittelförderelements 30f betrachtet hinter dem Schneidwerkzeug 12f angeordnet. Der Erfassungsbereich 114f des ersten Infrarot-Sensorelements 34f und der Erfassungsbereich 116f des zweiten Infrarot-Sensorelements 36f sind quer zueinander angeordnet. Der Erfassungsbereich 114f des ersten Infrarot-Sensorelements 34f und der Erfassungsbereich 116f des zweiten Infrarot-Sensorelements 36f überlappen sich zumindest abschnittsweise.

Figur 12 zeigt eine erste alternative Bremseinheit 74g in einer schematischen Darstellung. Eine Sicherheitseinheit 16g umfasst die Bremseinheit 74g. Eine Lebensmittelschneidevorrichtung 10g weist die Sicherheitseinheit 16g auf. Die Lebensmittelschneidevorrichtung 10g umfasst ein Schneidwerkzeug 12g. Die Lebensmittelschneidevorrichtung 10g umfasst zumindest eine Antriebswelle 42g zu einem, insbesondere rotierenden, Antrieb des Schneidwerkzeugs 12g. Die Sicherheitseinheit 16g umfasst zumindest ein Bremselement 40g, das zu einem Abbremsen einer Bewegung des Schneidwerkzeugs 12g in Abhängigkeit von einem Signal einer Erfassungseinheit der Sicherheitseinheit 16g mit der Antriebswelle 42g in Eingriff bringbar ist. Die Bremseinheit 74g der Sicherheitseinheit 16g umfasst das Bremselement 40g. Das Bremselement 40g ist als ein Bremsbolzen ausgebildet. Alternativ ist denkbar, dass das Bremselement 40g als eine Bremsbacke, als ein Bremsstift, als ein Bremshebel o. dgl. ausgebildet ist. Das Bremselement 40g ist dazu vorgesehen, zu einem Abbremsen einer Bewegung des Schneidwerkzeugs 12g einen mittelbaren Formschluss mit der Antriebswelle 42g, insbesondere mit einer an der Antriebswelle 42g fixierten Bremshülse 124g, zu bilden. Die Bremshülse 124g ist zumindest im Wesentlichen hülsenförmig um die Antriebswelle 42g angeordnet. Die Bremshülse 124g ist einstückig mit der Antriebswelle 42g ausgebildet. Alternativ ist denkbar, dass das Bremselement 40g dazu vorgesehen ist, einen unmittelbaren Formschluss mit der Antriebswelle 42g zu bilden. Die Bremshülse 124g weist entlang eines zumindest im Wesentlichen kompletten maximalen Umfangs der Bremshülse 124g, insbesondere zumindest im Wesentlichen senkrecht zu einer Längsachse 126g der Antriebswelle 42g, Einkerbungen 128g auf. Das Bremselement 40g ist dazu vorgesehen, in die Einkerbungen 128g einzugreifen. Die Einkerbungen 128g sind zu einer formschlüssigen Aufnahme des Bremselements 40g vorgesehen. Insbesondere umfasst die Bremshülse 124g entlang des zumindest im Wesentlichen kompletten maximalen Umfangs der Bremshülse 124g um höchstens 120° voneinander beabstandete Einkerbungen 128g, bevorzugt um höchstens 50° voneinander beabstandete Einkerbungen 128g und besonders bevorzugt um höchstens 30° voneinander beabstandete Einkerbungen 128g. Die Bremseinheit 74g weist einen Aktor 130g auf. Der Aktor 130g ist dazu vorgesehen, das Bremselement 40g in Kontakt mit der Antriebswelle 42g zu bewegen. Der Aktor 130g ist dazu vorgesehen, das Bremselement 40g in Eingriff mit einer Einkerbung 128g der Bremshülse 124g zu bringen. Der Aktor 130g ist als ein Direktantrieb ausgebildet. Alternativ ist denkbar, dass die Bremseinheit 74g zu einer Unterstützung des Aktors 130g ein Getriebe, Zahnräder, Hebel o. dgl. aufweist.

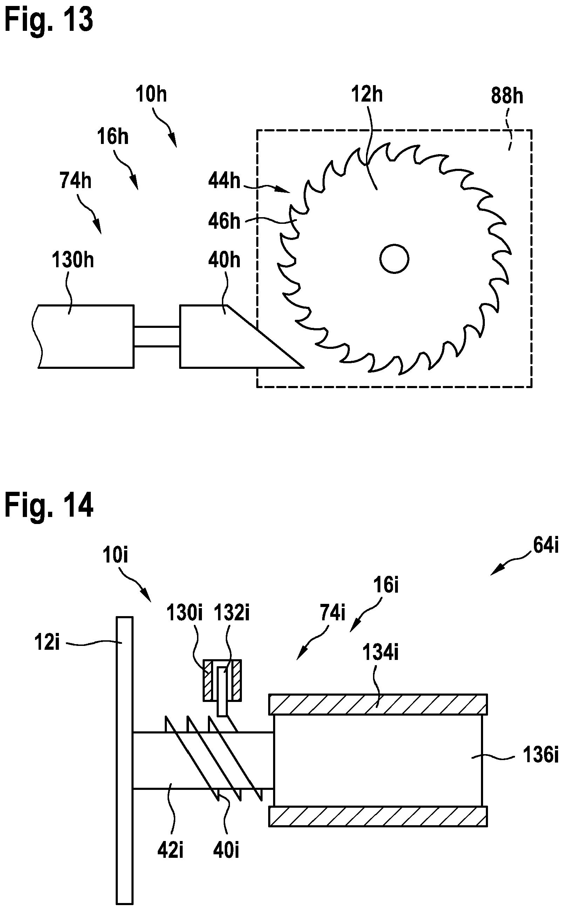

Figur 13 zeigt eine zweite alternative Bremseinheit 74h in einer schematischen Darstellung. Eine Sicherheitseinheit 16h umfasst die Bremseinheit 74h. Eine Lebensmittelschneidevorrichtung 10h weist die Sicherheitseinheit 16h auf. Die Lebensmittelschneidevorrichtung 10h umfasst ein Schneidwerkzeug 12h. Die Sicherheitseinheit 16h umfasst zumindest ein Bremselement 40h, das zu einem Abbremsen einer Bewegung des Schneidwerkzeugs 12h in Abhängigkeit von einem Signal einer Erfassungseinheit der Sicherheitseinheit 16h mit einer Schneidkante 44h des Schneidwerkzeugs 12h, insbesondere mit an der Schneidkante 44h angeordneten Schneidzähnen 46h, in Eingriff bringbar ist. Die Bremseinheit 74h der Sicherheitseinheit 16h umfasst das Bremselement 40h. Das Bremselement 40h ist als eine Bremsbacke ausgebildet. Die Schneidkante 44h des Schneidwerkzeugs 12h ist als eine scharfe Kante des Schneidwerkzeugs 12h ausgebildet, mittels der das Schneidwerkzeug 12h ein zu durchtrennendes Lebensmittel durchtrennen kann. Die Schneidkante 44h ist durch an der Schneidkante 44h angeordnete Schneidzähne 46h scharf ausgebildet. Alternativ oder zusätzlich ist vorstellbar, dass die Schneidkante 44h durch einen Schliff der Schneidkante 44h scharf ausgebildet ist. Die Schneidkante 44h erstreckt sich entlang eines zumindest im Wesentlichen kompletten maximalen Umfangs des Schneidwerkzeugs 12h zumindest im Wesentlichen in einer Haupterstreckungsebene 88h des Schneidwerkzeugs 12h. Das Bremselement 40h ist zu einem Eingriff mit der Schneidkante 44h des Schneidwerkzeugs 12h zumindest im Wesentlichen parallel zu, insbesondere innerhalb der, Haupterstreckungsebene 88h des Schneidwerkzeugs 12h an das Schneidwerkzeug 12h bewegbar. Die Bremseinheit 74h weist einen Aktor 130h auf. Der Aktor 130h ist dazu vorgesehen, das Bremselement 40h zu einem Eingriff mit der Schneidkante 44h des Schneidwerkzeugs 12h an das Schneidwerkzeug 12h zu bewegen.

Figur 14 zeigt eine dritte alternative Bremseinheit 74i in einer schematischen Darstellung. Eine Sicherheitseinheit 16i umfasst die Bremseinheit 74i. Eine Lebensmittelschneidevorrichtung 10i weist die Sicherheitseinheit 16i auf. Die Lebensmittelschneidevorrichtung 10i umfasst ein Schneidwerkzeug 12i. Die Sicherheitseinheit 16i umfasst zumindest ein als eine Schlingfeder ausgebildetes Bremselement 40i, das zu einem Abbremsen einer Bewegung des Schneidwerkzeugs 12i in Abhängigkeit von einem Signal einer Erfassungseinheit der Sicherheitseinheit 16i, insbesondere magnetisch, anziehbar ist. Die Bremseinheit 74i der Sicherheitseinheit 16i weist das Bremselement 40i auf. Das Bremselement 40i ist zumindest abschnittsweise schraubenartig um eine Antriebswelle 42i der Lebensmittelschneidevorrichtung 10i herum angeordnet. Ein Ende des Bremselements 40i ist an einem Gehäuse der Lebensmittelschneidevorrichtung 10i fixiert (hier nicht dargestellt). Ein weiteres Ende 132i des Bremselements 40i ist mit einem Aktor 130i der Bremseinheit 74i verbunden. Der Aktor 130i ist als ein Elektromagnet ausgebildet. Der Aktor 130i ist als ein Hubmagnet ausgebildet. Zu einem Abbremsen einer Bewegung des Schneidwerkzeugs 12i ist der Aktor 130i dazu vorgesehen, das Bremselement 40i, insbesondere das weitere Ende 132i des Bremselements 40i, anzuziehen. Das Bremselement 40i liegt in einem angezogenen Zustand des Bremselements 40i an der Antriebswelle 42i an und bildet einen Reibschluss mit der Antriebswelle 42i. In Figur 14 ist das Bremselement 40i in einem nicht angezogenen Zustand dargestellt. Die Antriebswelle 42i ist mit einer Antriebseinheit 64i der Lebensmittelschneidevorrichtung 10i verbunden. Die Antriebseinheit 64i ist als ein Elektromotor ausgebildet. Die Antriebseinheit 64i weist einen Stator 134i und einen Rotor 136i auf. Die Antriebseinheit 64i ist als ein Innenläufermotor ausgebildet.

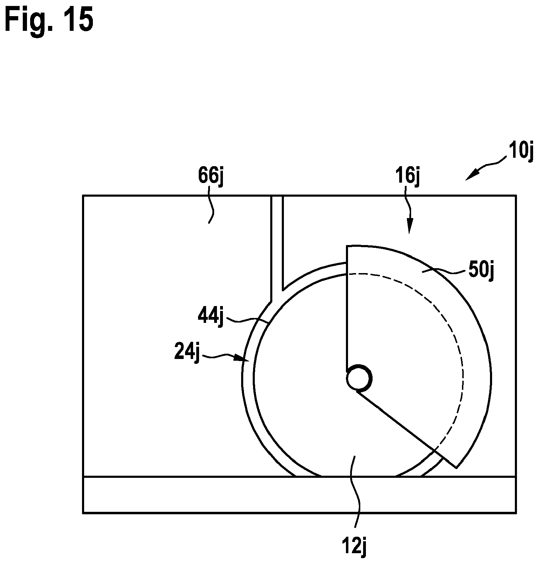

Figur 15 zeigt eine alternative Sicherheitseinheit 16j mit einem Trennelement 50j in einer schematischen Darstellung. Eine Lebensmittelschneidevorrichtung 10j umfasst die Sicherheitseinheit 16j. Die Lebensmittelschneidevorrichtung 10j weist ein Schneidwerkzeug 12j auf. Die Sicherheitseinheit 16j weist zumindest ein Trennelement 50j auf, das in Abhängigkeit von einer Erfassung zumindest eines Körperteils eines Bedieners der Lebensmittelschneidevorrichtung 10j in einem Nahbereich 24j des Schneidwerkzeugs 12j zu einer automatischen räumlichen Beabstandung des Körperteils des Bedieners von dem Schneidwerkzeug 12j vorgesehen ist. Die Lebensmittelschneidevorrichtung 10j des vorliegenden Ausführungsbeispiels ist unabhängig von einer Bremseinheit ausgebildet. Alternativ ist jedoch vorstellbar, dass die Sicherheitseinheit 16j das Trennelement 50j und eine Bremseinheit aufweist. Das Trennelement 50j ist in Abhängigkeit von einem Signal einer Erfassungseinheit der Sicherheitseinheit 16j zwischen das Schneidwerkzeug 12j und das Körperteil des Bedieners bewegbar. Das Trennelement 50j ist dazu vorgesehen, das Schneidwerkzeug 12j, insbesondere eine Schneidkante 44j des Schneidwerkzeugs 12j, zumindest teilweise abzudecken. Das Trennelement 50j ist dazu vorgesehen, das Körperteil des Bedieners von dem Schneidwerkzeug 12j wegzudrücken. Die Sicherheitseinheit 16j weist zumindest einen Aktor und/oder eine Energiespeichereinheit zu einer Kraftbeaufschlagung des Trennelements 50j auf (hier nicht weiter dargestellt). Das Trennelement 50j ist als eine Schutzhaube ausgebildet. Alternativ ist vorstellbar, dass das Trennelement 50j als ein Sicherheitsbügel, als ein Sicherheitsblech, als ein, insbesondere automatisch aufblasbares, Luftkissen o. dgl. ausgebildet ist. Alternativ oder zusätzlich ist denkbar, dass eine Schnitttiefeneinstellungseinheit 66j der Lebensmittelschneidevorrichtung 10j als ein Trennelement 50j dient. Insbesondere ist denkbar, dass die Schnitttiefeneinstellungseinheit 66j in Abhängigkeit von einer Erfassung des Körperteils des Bedieners in dem Nahbereich 24j des Schneidwerkzeugs 12j automatisch vor eine Schneidkante 44j des Schneidwerkzeugs 12j fahrbar ist.

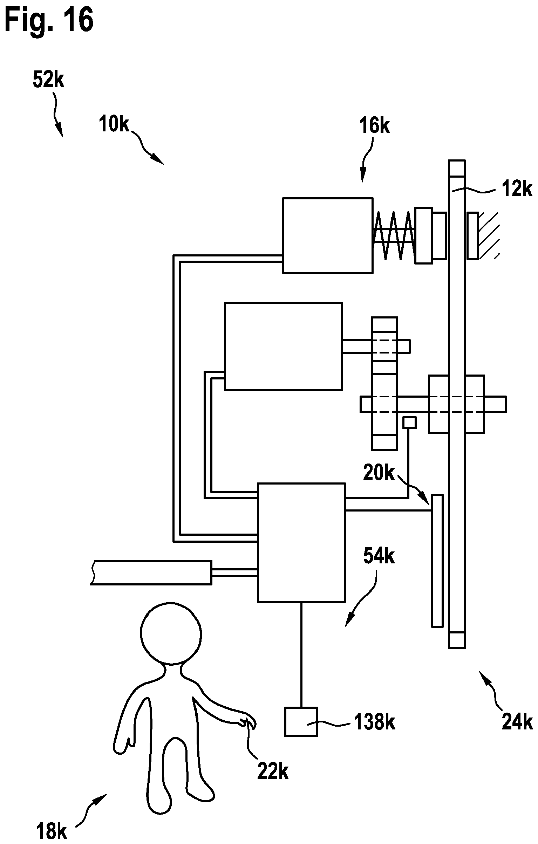

Figur 16 zeigt ein Lebensmittelschneidesystem 52k in einer schematischen Darstellung. Das Lebensmittelschneidesystem 52k umfasst zumindest eine Lebensmittelschneidevorrichtung 10k und zumindest eine mit zumindest einem Bediener 18k der Lebensmittelschneidevorrichtung 10k koppelbare Übermittlungseinheit 54k. Die Übermittlungseinheit 54k ist dazu eingerichtet, zumindest ein von zumindest einer Sicherheitseinheit 16k der Lebensmittelschneidevorrichtung 10k in einem Nahbereich 24k zumindest eines Schneidwerkzeugs 12k der Lebensmittelschneidevorrichtung 10k erfassbares Signal bereitzustellen. In Abhängigkeit von einer Erfassung des Signals ist eine Bewegung des Schneidwerkzeugs 12k abbremsbar. Die Übermittlungseinheit 54k ist elektrisch und/oder mechanisch mit dem Bediener 18k koppelbar. Der Bediener 18k ist in Figur 16 der Übersichtlichkeit halber stark verkleinert dargestellt. Die Übermittlungseinheit 54k umfasst zumindest eine Übermittlungselektrode 138k, die dazu vorgesehen ist, ein elektrisches Signal bereitzustellen. Die Übermittlungselektrode 138k ist dazu vorgesehen, den Bediener 18k mit dem elektrischen Signal zu beaufschlagen. Das elektrische Signal ist von der Sicherheitseinheit 16k, insbesondere von einer Erfassungseinheit 20k der Sicherheitseinheit 16k, in dem Nahbereich 24k des Schneidwerkzeugs 12k erfassbar. Alternativ oder zusätzlich ist denkbar, dass die Übermittlungseinheit 54k zumindest ein Sendeelement, beispielhaft einen Funksender oder einen Infrarotsender, aufweist, das dazu eingerichtet ist, ein elektromagnetisches Signal auszusenden. Es ist denkbar, dass das Sendeelement an dem Bediener 18k, insbesondere an einem Körperteil 22k des Bedieners 18k, anordenbar ist, beispielsweise in Form eines Armbands, eines Clips o. dgl. Die Sicherheitseinheit 16k, insbesondere die Erfassungseinheit 20k der Sicherheitseinheit 16k, kann dazu eingerichtet sein, das elektromagnetische Signal in dem Nahbereich 24k des Schneidwerkzeugs 12k zu erfassen.

## Patentansprüche

1. Lebensmittelschneidevorrichtung, insbesondere Brotschneidevorrichtung, mit zumindest einem Schneidwerkzeug (12a-12k) zu einem Durchtrennen von Lebensmitteln (14a; 14f) und mit zumindest einer Sicherheitseinheit (16a-16k) zu einem Schutz eines Bedieners (18a; 18f; 18k) vor Verletzungen durch das Schneidwerkzeug (12a-12k), **dadurch gekennzeichnet, dass** die Sicherheitseinheit (16a-16i; 16k) zumindest eine Erfassungseinheit (20a-20f; 20k) zu einer elektrischen, insbesondere kapazitiven, und/oder optosensorischen, insbesondere kamerafremden, Erfassung zumindest eines Körperteils (22a; 22f; 22k) des Bedieners (18a; 18f; 18k) in einem Nahbereich (24a-24i; 24k) des Schneidwerkzeugs (12a-12i; 12k) umfasst, wobei in Abhängigkeit von der Erfassung eine Bewegung des Schneidwerkzeugs (12a-12i; 12k) abbremsbar ist.

2. Lebensmittelschneidevorrichtung nach Anspruch 1, **dadurch gekennzeichnet, dass** die Erfassungseinheit (20a-20d) als eine, insbesondere mit dem Schneidwerkzeug (12a-12d) gekoppelte, kapazitive Erfassungseinheit ausgebildet ist.

3. Lebensmittelschneidevorrichtung nach Anspruch 2, **dadurch gekennzeichnet, dass** die Erfassungseinheit (20a) zumindest ein Kopplungselement (26a) aufweist, das dazu vorgesehen ist, das Schneidwerkzeug (12a) kontaktlos elektrisch zu laden, wobei das Schneidwerkzeug (12a) einen Teil der Erfassungseinheit (20a) ausbildet.

4. Lebensmittelschneidevorrichtung nach einem der vorhergehenden Ansprüche, **dadurch gekennzeichnet, dass** die Erfassungseinheit (20b; 20c) zumindest einen Kondensator (28b; 28c) umfasst, der zu einer Erfassung zumindest eines Körperteils des Bedieners in einem Nahbereich (24b; 24c) des Schneidwerkzeugs (12b; 12c) verstimmbar ist.

5. Lebensmittelschneidevorrichtung nach einem der vorhergehenden Ansprüche, **gekennzeichnet durch** zumindest ein Lebensmittelförderelement (30d), mit dem die Erfassungseinheit (20d) zu einer Erfassung eines geschlossenen Stromkreises (32d) zwischen dem Schneidwerkzeug (12d) und einem Körperteil des Bedieners elektrisch leitend verbunden ist.

6. Lebensmittelschneidevorrichtung nach einem der vorhergehenden Ansprüche, **dadurch gekennzeichnet, dass** die Erfassungseinheit (20f) zu einer optosensorischen Erfassung zumindest eines Körperteils (22f) des Bedieners (18f) in einem Nahbereich (24f) des Schneidwerkzeugs (12f) als eine Infrarot-Erfassungseinheit, insbesondere als eine Nahinfrarot-Erfassungseinheit, ausgebildet ist.

7. Lebensmittelschneidevorrichtung nach Anspruch 6, **dadurch gekennzeichnet, dass** die Erfassungseinheit (20f) zu einer zumindest im Wesentlichen vollständigen sensorischen Abdeckung des Nahbereichs (24f) des Schneidwerkzeugs (12f) zumindest zwei voneinander beabstandet angeordnete Infrarot-Sensorelemente (34f, 36f) umfasst.

8. Lebensmittelschneidevorrichtung nach einem der vorhergehenden Ansprüche, **dadurch gekennzeichnet, dass** die Sicherheitseinheit (16a) zumindest ein Wahlelement (38a) zu einer Einstellung eines Betriebsverhaltens der Erfassungseinheit (20a) in Abhängigkeit von einem zu durchtrennenden Lebensmittel (14a) aufweist.

9. Lebensmittelschneidevorrichtung nach einem der vorhergehenden Ansprüche, **dadurch gekennzeichnet, dass** die Erfassungseinheit (20a) dazu eingerichtet ist, in Abhängigkeit von einer Bewegung des Schneidwerkzeugs (12a), insbesondere unabhängig von einem Antrieb des Schneidwerkzeugs (12a), zumindest ein Körperteil (22a) des Bedieners (18a) in einem Nahbereich (24a) des Schneidwerkzeugs (12a) zu erfassen.

10. Lebensmittelschneidevorrichtung nach einem der vorhergehenden Ansprüche, **dadurch gekennzeichnet, dass** die Sicherheitseinheit (16a; 16g; 16h; 16i) zumindest ein Bremselement (40a; 40g; 40h; 40i) aufweist, das zu einem Abbremsen einer Bewegung des Schneidwerkzeugs (12a; 12g; 12h; 12i) mittels eines Formschlusses und/oder eines Reibschlusses vorgesehen ist.

11. Lebensmittelschneidevorrichtung nach einem der vorhergehenden Ansprüche, **dadurch gekennzeichnet, dass** die Sicherheitseinheit (16a) zumindest ein Bremselement (40a) aufweist, das zu einem Abbremsen einer Bewegung des Schneidwerkzeugs (12a) bis zu einem Stillstand des Schneidwerkzeugs (12a) innerhalb von höchstens 15 Millisekunden nach einem Eindringen zumindest eines Körperteils (22a) des Bedieners (18a) in den Nahbereich (24a) des Schneidwerkzeugs (12a) vorgesehen ist.

12. Lebensmittelschneidevorrichtung nach einem der vorhergehenden Ansprüche, **gekennzeichnet durch** zumindest eine Antriebswelle (42g) zu einem, insbesondere rotierenden, Antrieb des Schneidwerkzeugs (12g), wobei die Sicherheitseinheit (16g) zumindest ein Bremselement (40g) umfasst, das zu einem Abbremsen einer Bewegung des Schneidwerkzeugs (12g) in Abhängigkeit von einem Signal der Erfassungseinheit (20g) mit der Antriebswelle (42g) in Eingriff bringbar ist.

13. Lebensmittelschneidevorrichtung nach einem der vorhergehenden Ansprüche, **dadurch gekennzeichnet, dass** die Sicherheitseinheit (16h) zumindest ein Bremselement (40h) umfasst, das zu einem Abbremsen einer Bewegung des Schneidwerkzeugs (12h) in Abhängigkeit von einem Signal der Erfassungseinheit (20h) mit einer Schneidkante (44h) des Schneidwerkzeugs (12h), insbesondere mit an der Schneidkante (44h) angeordneten Schneidzähnen (46h), in Eingriff bringbar ist.

14. Lebensmittelschneidevorrichtung nach einem der vorhergehenden Ansprüche, **dadurch gekennzeichnet, dass** die Sicherheitseinheit (16i) zumindest ein als eine Schlingfeder ausgebildetes Bremselement (40i) umfasst, das zu einem Abbremsen einer Bewegung des Schneidwerkzeugs (12i) in Abhängigkeit von einem Signal der Erfassungseinheit (20i), insbesondere magnetisch, anziehbar ist.

15. Lebensmittelschneidevorrichtung nach einem der vorhergehenden Ansprüche, **dadurch gekennzeichnet, dass** die Sicherheitseinheit (16a) zumindest eine Energiespeichereinheit (48a) aufweist, die zu einer Kraftbeaufschlagung zumindest eines Bremselements (40a) der Sicherheitseinheit (16a), insbesondere zu einer Realisierung eines Eingriffs mit dem Schneidwerkzeug (12a) innerhalb von höchstens 7 Millisekunden nach einem Signalempfang von der Erfassungseinheit (20a), vorgesehen ist.

16. Lebensmittelschneidevorrichtung nach einem der vorhergehenden Ansprüche, **dadurch gekennzeichnet, dass** die Sicherheitseinheit (16a) in Abhängigkeit von einem erfassten Abstand eines Körperteils (22a) des Bedieners (18a) von dem Schneidwerkzeug (12a) zu einer Einleitung von unterschiedlichen, insbesondere kaskadierten, Bremsmaßnahmen eingerichtet ist.

17. Lebensmittelschneidevorrichtung nach dem Oberbegriff des Anspruchs 1, insbesondere nach einem der vorhergehenden Ansprüche, **dadurch gekennzeichnet, dass** die Sicherheitseinheit (16j) zumindest ein Trennelement (50j) aufweist, das in Abhängigkeit von einer Erfassung zumindest eines Körperteils des Bedieners in einem Nahbereich (24j) des Schneidwerkzeugs (12j) zu einer automatischen räumlichen Beabstandung des Körperteils des Bedieners von dem Schneidwerkzeug (12j) vorgesehen ist.

18. Lebensmittelschneidesystem mit zumindest einer Lebensmittelschneidevorrichtung, insbesondere einer Lebensmittelschneidevorrichtung nach einem der vorhergehenden Ansprüche und mit zumindest einer mit zumindest einem Bediener (18k) der Lebensmittelschneidevorrichtung koppelbaren Übermittlungseinheit (54k), **dadurch gekennzeichnet, dass,** die Übermittlungseinheit (54k) dazu eingerichtet ist, zumindest ein von zumindest einer Sicherheitseinheit (16k) der Lebensmittelschneidevorrichtung in einem Nahbereich (24k) zumindest eines Schneidwerkzeugs (12k) der Lebensmittelschneidevorrichtung erfassbares Signal bereitzustellen, wobei in Abhängigkeit von einer Erfassung des Signals eine Bewegung des Schneidwerkzeugs (12k) abbremsbar ist.

19. Lebensmittelschneidemaschine, insbesondere Brotschneidemaschine, mit zumindest einer Lebensmittelschneidevorrichtung nach einem der vorhergehenden Ansprüche.
